# EUROPEAN PATENT APPLICATION

(11) **EP 4 757 295 A1**
(43) Date of publication of application: **10.06.2026**
(21) Application number: 24866900.4
(22) Date of filing: 28.05.2024
(51) Int. Cl.: H04L 67/562, H04L 67/60

(54) **COMMUNICATION METHOD, COMMUNICATION NETWORK, SWITCHING NODE, AND STORAGE MEDIUM**

(30) Priority: 22.09.2023 CN 202311240886
(71) Applicant: Huawei Technologies Co., Ltd., Shenzhen, Guangdong 518129 (CN)
(72) Inventor: XIE, Shanggang, Shenzhen, Guangdong 518129 (CN); CHEN, Tianxiang, Shenzhen, Guangdong 518129 (CN); CHEN, Yijie, Shenzhen, Guangdong 518129 (CN)
(74) Representative: Goddar, Heinz J.
(86) International application number: PCT/CN2024/095776
(87) International publication number: WO 2025/060479

(57) **Abstract**

This application provides a communication method, including: A plurality of first-layer first target switch nodes receive to-be-computed data of a same periodic compute task and target communication task IDs corresponding to the to-be-computed data that are sent by a plurality of compute nodes, where a plurality of communication tasks (including a target communication task) are generated during execution of the compute task. The plurality of first target switch nodes compute the to-be-computed data, to obtain intermediate data. A second target switch node computes the intermediate data of the same target communication task IDs, to obtain a data compute result, and sends the computed data compute result to the compute nodes via the first target switch nodes. Because the switch node computes the to-be-computed data based on the target communication task IDs, compute resources of the switch node do not need to be bound to the compute task. This can improve utilization of the compute resources of the switch node. In addition, this application further provides a corresponding communication network, switch node, and storage medium.

## Description

This application claims priority to Chinese Patent Application No. 202311240886.2, filed with the China National Intellectual Property Administration on September 22, 2023 and entitled "COMMUNICATION METHOD, COMMUNICATION NETWORK, SWITCH NODE, AND STORAGE MEDIUM", which is incorporated herein by reference in its entirety.

### TECHNICAL FIELD

This application relates to the field of communication technologies, and in particular, to a communication method, a communication network, a switch node, and a storage medium.

### BACKGROUND

With the advancement of high performance computing (High Performance Computing, HPC) and artificial intelligence (Artificial Intelligence, AI) technologies, a plurality of large-scale applications emerge, and an amount of data that the large-scale applications need to process continues to increase. Currently, in a process in which a plurality of compute nodes on an edge side collaboratively execute a same periodic compute task, collective communication operations may be offloaded to switch nodes in a network, for example, switches. In other words, after the plurality of compute nodes on the edge side upload data to the switch nodes, the switch nodes compute data, for example, reduce (reduce) data, and return compute results to the edge side. For example, in scenarios of performing distributed training on an artificial intelligence (artificial intelligence, AI) model, a plurality of devices on the edge side collaboratively perform iterative training on a same AI model. In each round of training, each compute node on the edge side may train the AI model on the device based on a group of allocated training samples, and send trained parameters of the AI model to the switch nodes in the network. Then, the switch nodes reduce and compute the data uploaded by the plurality of compute nodes on the edge side, and distribute computed model parameters to each compute node on the edge side. In this way, each compute node on the edge side updates the parameters of the AI model based on the received model parameters, thereby completing one round of training on the AI model.

Typically, a subnet manager (subnet manager) in the network specifies a switch node in the network for a periodic compute task (for example, a model training task), and binds compute resources of the switch node to the compute task. Therefore, the switch node can utilize the compute resources to perform a corresponding data computing process for the compute task.

However, in the process in which the compute node on the edge side uploads data to the switch node and generates to-be-uploaded data (for example, the edge device trains the AI model to generate new model parameters), the compute resources of the switch node remain idle most of the time, resulting in low utilization of those compute resources.

### SUMMARY

**In** view of this, embodiments of this application provide a communication method, to reduce duration for which compute resources of a switch node remain idle, so as to improve utilization of those compute resources. This application further provides a corresponding communication network, switch node, computer-readable storage medium, and computer program product.

According to a first aspect, an embodiment of this application provides a communication method. The communication method is applied to a communication network, the communication network includes switch nodes at a plurality of layers, the switch node may be a device with a data switching function, for example, a switch, the plurality of layers include a first layer and a second layer, and different first-layer switch nodes communicate with each other via a second-layer switch node. The first-layer switch nodes include a plurality of first target switch nodes, and the second-layer switch node includes at least one second target switch node (various target switch nodes in embodiments mean switch nodes for data computing in the communication network). The plurality of first target switch nodes receive to-be-computed data of a same periodic compute task (for example, a model training task) and target communication task IDs corresponding to the to-be-computed data that are sent by a plurality of compute nodes (for example, a GPU, an NPU, a TPU, or an AI processing chip), where the plurality of compute nodes generate a plurality of communication tasks during execution of the compute task, the target communication task ID indicates one of the plurality of communication tasks, and the target communication task IDs sent by all the compute nodes are the same. Then, the plurality of first target switch nodes compute the received to-be-computed data, to obtain intermediate data, and send the intermediate data and the target communication task IDs to the at least one second target switch node. The at least one second target switch node computes the received intermediate data corresponding to the same target communication task IDs, to obtain a data compute result, and sends the data compute result to the plurality of first target switch nodes, so that the plurality of first target switch nodes send the data compute result to the plurality of compute nodes that execute the compute task.

Because the first target first-layer switch nodes and the second-layer second target switch node compute, based on the target communication task IDs, the to-be-computed data uploaded by the plurality of compute nodes on an edge side, instead of computing the data based on an identity of the compute task, compute resources of the target switch nodes at each layer do not need to be bound to the periodic compute task executed on the edge side. Therefore, after completing computing based on the target communication task IDs, the target switch nodes at the layers may not need to wait for the plurality of compute nodes to upload a next batch of to-be-computed data of the compute task, but may directly compute, using the compute resources, data that is of another compute task and that is uploaded by another compute node. This can reduce duration for which the compute resources of the target switch node remain idle, to improve utilization of the compute resources of the target switch nodes at each layer.

In a possible implementation, that the plurality of first target switch nodes send the intermediate data and the target communication task IDs to the at least one second target switch node may specifically be obtaining indication information, where the indication information indicates that a switch node that computes the intermediate data is the at least one second target switch node, for example, the indication information may be information such as an IP address or an identity of the second target switch node. Then, the plurality of first target switch nodes send the intermediate data and the target communication task IDs to the at least one second target switch node. Therefore, when obtaining the indication information, the first target switch nodes may determine to send the intermediate data to one specific second-layer second target switch node or some specific second-layer second target switch nodes and perform corresponding computing, to obtain the final data compute result via the second-layer switch node.

In a possible implementation, that the plurality of first target switch nodes obtain the indication information may specifically be sending first in-network compute requests to a first candidate switch node in the second-layer switch node, for example, determining the first candidate second-layer switch node based on a hash operation and sending the first in-network compute requests to the first candidate switch node, where the first in-network compute request is used to request the first candidate switch node to compute the intermediate data. Then, the plurality of first target switch nodes receive a change request sent by the first candidate switch node, where the change request indicates to change the second-layer switch node that processes the intermediate data, for example, the first candidate switch node may send the change request to the plurality of first target switch nodes when load is high. The plurality of first target switch nodes may request one second-layer switch node to perform computing again. Specifically, the plurality of first target switch nodes send second in-network compute requests to a second candidate switch node in the second-layer switch node, where the second in-network compute request is used to request the first candidate switch node to compute the intermediate data. Finally, the plurality of first target switch nodes receive the indication information sent by the second candidate switch node, where the indication information indicates the second candidate switch node to compute the intermediate data. In this case, the plurality of first target switch nodes may determine that the second target switch node that computes the intermediate data is the second candidate switch node. Therefore, the plurality of first target switch nodes may determine, by negotiating with the second-layer switch nodes, the second-layer second target switch node that can compute the intermediate data, to complete task orchestration for data computing. This can dynamically select a second-layer switch node in the communication network to compute the intermediate data, to improve flexibility of determining the second target switch node. In addition, the foregoing process does not need to be controlled by a single node, to avoid a problem that the compute resource of the second target switch node cannot be released for long time due to a failure of the single node.

In a possible implementation, that the plurality of first target switch nodes obtain the indication information may specifically be receiving a plurality of in-network requests sent by the plurality of compute nodes, where all of the plurality of in-network requests include the same target communication task IDs. The plurality of first target switch nodes may generate the indication information based on the target communication task IDs, for example, perform a hash operation on the target communication task IDs, and determine, based on an obtained hash value, which second-layer switch node computes the intermediate data. Therefore, the compute nodes on the edge side can complete task orchestration for data computing, and the switch node does not need to perform a task orchestration process, to effectively reduce a delay of obtaining the data compute result. In addition, the foregoing process does not need to be controlled by a single node, to avoid a problem that the compute resource of the second target switch node cannot be released for long time due to a failure of the single node.

In a possible implementation, there are a plurality of second target switch nodes. That the plurality of first target switch nodes send the intermediate data and the target communication task IDs to the at least one second target switch node may specifically be: Each first target switch node divides the generated intermediate data into a plurality of subsets, where a quantity of subsets is the same as a quantity of second target switch nodes. Then, each first target switch node sends the plurality of subsets and the target communication task ID to the plurality of second target switch nodes, where each first target switch node sends one of the plurality of subsets and the target communication task ID to each second target switch node. This can improve utilization of the compute resources of the plurality of second target switch nodes. In addition, the foregoing process does not need to be controlled by a single node, to avoid a problem that the compute resources of the plurality of second target switch nodes cannot be released for long time due to a failure of the single node. In this case, the plurality of second target switch nodes perform in-network computing in parallel. In comparison with a single switch node performing in-network computing, this can effectively improve in-network computing efficiency, and also implement load balancing of the switch nodes.

In a possible implementation, the communication network further includes a central controller. The central controller obtains load information, where the load information indicates load of the plurality of first-layer switch nodes and load of the plurality of second-layer switch nodes in the communication network; and sends an identity of the at least one second target switch node to the plurality of compute nodes on the edge side based on the load information. In this way, the plurality of compute nodes send the indication information to the plurality of first target switch nodes, so that the plurality of first target switch nodes can determine, based on the indication information, which switch node/which second-layer switch nodes to send the intermediate data and the target communication task IDs to. Therefore, the intermediate controller can implement task orchestration for data computing. This reduces requirements on the compute node and the switch node.

In a possible implementation, the communication network further includes a central controller. The central controller obtains load information, where the load information indicates load of the plurality of first-layer switch nodes and load of the plurality of second-layer switch nodes in the communication network; and sends the indication information to the plurality of first target switch nodes based on the load information, so that the plurality of first target switch nodes can determine which switch node/which second-layer switch nodes to send the intermediate data to. Therefore, the intermediate controller can implement task orchestration for data computing. This reduces requirements on the compute node and the switch node.

According to a second aspect, this application provides a communication network. The communication network includes switch nodes at a plurality of layers, the plurality of layers include a first layer and a second layer, different first-layer switch nodes communicate with each other via a second-layer switch node, the first-layer switch nodes include a plurality of first target switch nodes, and the second-layer switch node includes at least one second target switch node. The plurality of first target switch nodes are configured to: receive to-be-computed data of a same periodic compute task and target communication task identities IDs corresponding to the to-be-computed data that are sent by a plurality of compute nodes, where the plurality of compute nodes generate a plurality of communication tasks during execution of the compute task, the target communication task ID indicates one of the plurality of communication tasks, and the target communication task IDs sent by all of the plurality of compute nodes are the same; compute the to-be-computed data, to obtain intermediate data; and send the intermediate data and the target communication task IDs to the at least one second target switch node. The at least one second target switch node is configured to: receive the intermediate data and the target communication task IDs; compute the intermediate data corresponding to the same target communication task IDs, to obtain a data compute result; and send the data compute result to the plurality of first target switch nodes. The plurality of first target switch nodes are further configured to send the data compute result to the plurality of compute nodes that execute the compute task.

In a possible implementation, the plurality of first target switch nodes are specifically configured to: obtain indication information, where the indication information indicates that a switch node that computes the intermediate data is the at least one second target switch node; and send the intermediate data and the communication task IDs to the at least one second target switch node.

In a possible implementation, the plurality of first target switch nodes are specifically configured to: send first in-network compute requests to a first candidate switch node in the second-layer switch node, where the first in-network compute request is used to request the first candidate switch node to compute the intermediate data; receive a change request sent by the first candidate switch node, where the change request indicates to change the second-layer switch node that processes the intermediate data; send second in-network compute requests to a second candidate switch node in the second-layer switch node, where the second in-network compute request is used to request the first candidate switch node to compute the intermediate data; and receive the indication information sent by the second candidate switch node, where the indication information indicates the second candidate switch node to compute the intermediate data, and the second target switch node is the second candidate switch node.

In a possible implementation, the plurality of first target switch nodes are configured to receive a plurality of in-network requests sent by the plurality of compute nodes, where each of the plurality of in-network requests includes the target communication task ID; and generate the indication information based on the target communication task IDs.

In a possible implementation, there are a plurality of second target switch nodes. Each of the plurality of first target switch nodes is configured to: divide the generated intermediate data into a plurality of subsets, where a quantity of subsets is the same as a quantity of second target switch nodes; and send the plurality of subsets and the target communication task ID to the plurality of second target switch nodes, where each first target switch node sends one of the plurality of subsets and the target communication task ID to each second target switch node.

In a possible implementation, the communication network further includes a central controller, and the central controller is configured to: obtain load information, where the load information indicates load of the plurality of first-layer switch nodes and load of the plurality of second-layer switch nodes in the communication network; and send an identity of the at least one second target switch node to the plurality of compute nodes based on the load information. The plurality of first target switch nodes are further configured to receive the indication information sent by the plurality of compute nodes.

In a possible implementation, the communication network further includes a central controller. The central controller is configured to: obtain load information, where the load information indicates load of the plurality of first-layer switch nodes and load of the plurality of second-layer switch nodes in the communication network; and send the indication information to the plurality of first target switch nodes based on the load information.

According to a third aspect, this application provides a switch node, including a processor and a memory. The memory is configured to store instructions, and the processor executes the instructions stored in the memory, to cause the switch node to perform the communication method performed by the second target switch node in the first aspect or any possible implementation of the first aspect, or to perform the communication method performed by the first target switch node in the first aspect or any possible implementation of the first aspect.

According to a fourth aspect, this application provides a computer-readable storage medium. The computer-readable storage medium stores instructions. When the instructions are run on a switch node, the switch node is caused to perform the communication method performed by the second target switch node in the first aspect or any possible implementation of the first aspect, or perform the communication method performed by the first target switch node in the first aspect or any possible implementation of the first aspect.

According to a fifth aspect, this application provides a computer program product including instructions. When the instructions are run on at least one compute device, the switch node is caused to perform the communication method performed by the second target switch node in the first aspect or any possible implementation of the first aspect, or perform the communication method performed by the first target switch node in the first aspect or any possible implementation of the first aspect.

In this application, based on the implementations provided in the foregoing aspects, the implementations may be further combined to provide more implementations.

### BRIEF DESCRIPTION OF DRAWINGS

FIG. 1 is a diagram of a structure of an example of a communication network 10 according to this application;
FIG. 2 is a diagram of structures of examples of a compute node and a switch node according to this application;
FIG. 3 is a schematic flowchart of a communication method according to this application;
FIG. 4A and FIG. 4B are a schematic flowchart of another communication method according to this application;
FIG. 5 is a diagram of selecting a second-layer switch node by a first-layer switch node through rehashing;
FIG. 6A and FIG. 6B are a schematic flowchart of another communication method according to this application;
FIG. 7A and FIG. 7B are a schematic flowchart of another communication method according to this application;
FIG. 8 is a diagram of sending different subsets of to-be-computed data to different second-layer switch nodes;
FIG. 9A and FIG. 9B are a schematic flowchart of another communication method according to this application; and
FIG. 10A and FIG. 10B are a schematic flowchart of another communication method according to this application.

### DESCRIPTION OF EMBODIMENTS

The following describes solutions in embodiments provided in this application with reference to accompanying drawings in this application.

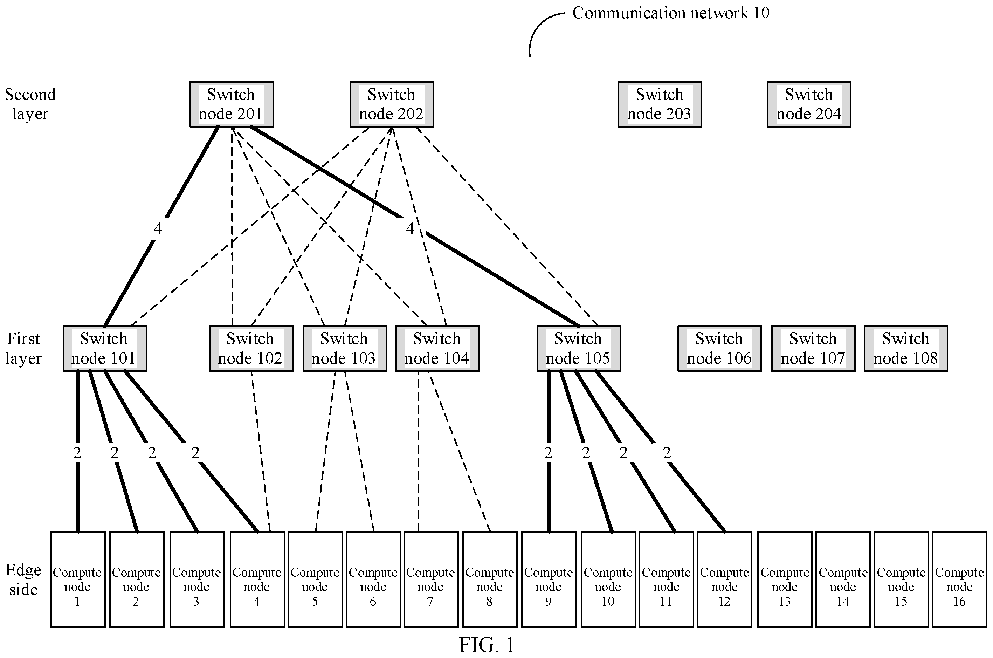

FIG. 1 is a diagram of a structure of a communication network according to an embodiment of this application. As shown in FIG. 1, a communication network 10 includes switch nodes at a plurality of layers, and each layer may include a plurality of switch nodes. For ease of understanding and description, an example in which switch nodes at two layers are included is used for description in FIG. 1. A first layer includes eight switch nodes, and a second layer includes four switch nodes. Each first-layer switch node may be connected to one or more compute nodes on an edge side, and connected to one or more second-layer switch nodes. For ease of description of connection relationships between the compute nodes and the switch nodes at different layers, FIG. 1 shows merely a connection relationship among some devices. For a connection relationship among other devices, refer to FIG. 1 and the following descriptions.

The first-layer switch node is configured to forward data between the compute node on the edge side and the second-layer switch node, including forwarding, to the second-layer switch node, data sent by the compute node, and forwarding, to the compute node on the edge side, data sent by the second-layer switch node. In addition, the first-layer switch node can also perform data reduction for the plurality of compute nodes on the edge side, and forward the data obtained through reduction to the second-layer switch node.

The second-layer switch node is configured to forward data between different first-layer switch nodes. In addition, the second-layer switch node can further perform data reduction for a plurality of compute nodes on the edge side, for example, perform allreduce computing (that is, reduce data uploaded by the plurality of compute nodes, and then distribute a result to each compute node).

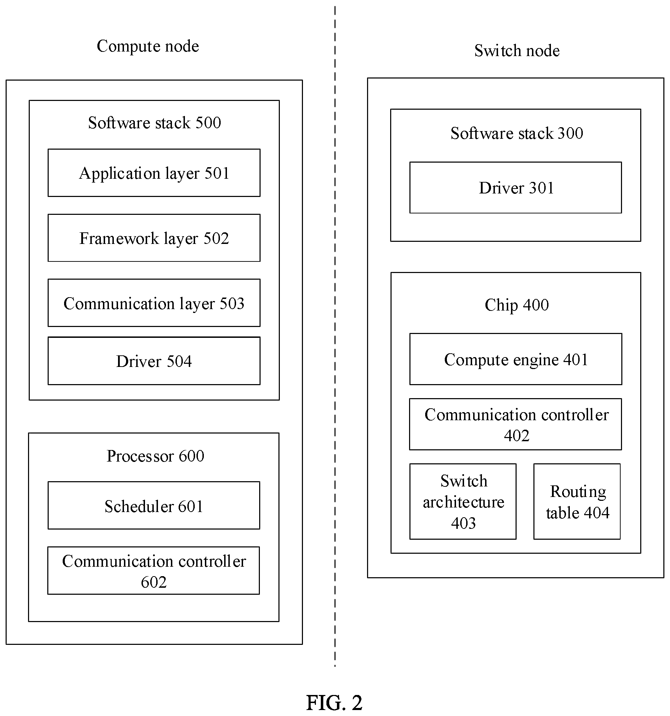

In an implementation example, the switch node in the communication network 10 may have an architecture shown in FIG. 2, and include a software stack 300 and a chip 400.

The software stack 300 is a set of independent components that are configured to cooperate to ensure normal running of functions of the switch node, and may be configured to cache data in the switch node, create storage permission, create a queue number, and the like. In addition, the software stack 300 may include a driver 301. The software stack 301 invokes the chip 400 by using the driver 301, so that the switch node performs a corresponding function (for example, a data forwarding function).

The chip 400 may include a compute engine 401, a communication control unit (communication control unit) 402, a switch architecture 403, a routing table 404, and the like. The compute engine 401 is configured to perform a corresponding data computing process, for example, reduce data uploaded by the plurality of compute nodes. The communication control unit 402 is configured to control a communication process between the switch node and another device (another switch node or a compute node). The switch architecture 403 is configured to control enabling or disabling of an interface that is on the switch node and that is configured to forward data, so that the switch node forwards data to another device. The routing table 404 is configured to record a forwarding interface and a next-hop route, to determine, based on information recorded in the routing table, a next-hop node to which data is forwarded.

In the communication network 10 shown in FIG. 1, the switch node at each layer may use the architecture shown in FIG. 2. Alternatively, the second-layer switch node may use the architecture shown in FIG. 2, and the first-layer switch node may not include the compute engine 401. During actual application, the switch node in the communication network 10 may be any device with a data forwarding capability, for example, a switch, a switch chip, or a router. An architecture used by the switch node is not limited to the example shown in FIG. 2.

A compute node 1 to a compute node 16 may each be a device including a processor, for example, a terminal or a server. In addition, the plurality of compute nodes may perform collective communication (collective communication), to collaboratively execute a same periodic compute task, for example, a distributed model training task. For example, the compute node may have an architecture shown in FIG. 2, and include a software stack 500 and a processor 600.

The software stack 500 is a set of independent components that are configured to cooperate to ensure normal running of functions of the compute node, and may be configured to execute a corresponding service, for example, a model training service. As shown in FIG. 2, the software stack 500 includes an application layer 501, a framework layer 502, a communication layer 503, and a driver 504. The application layer 501 is configured to provide one or more services. For example, a user may configure a service of the compute node at the application layer. The framework layer 502 may be, for example, a deep learning framework like MindSpore or TensorFlow, and is configured to generate, based on the service at the application layer and topology information of the communication network 10, a communication operator, a compute operator, and the like that need to be executed by the compute node. The communication layer 503 is configured to receive the communication operator delivered by the framework layer 502, and convert the communication operator into a communication task (task) that needs to be executed by the processor 600. The communication layer 503 may include a collective communication library, for example, the Huawei Collective Communication Library (Huawei Collective Communication Library, HCCL). The driver 504 is configured to drive, based on the compute operator or the communication operator delivered by the framework layer, the processor 600 to perform a corresponding computing operation or communication operation.

The processor 600 is configured to perform a corresponding computing operation for the service at the application layer 501. In addition, the processor 600 may further include a scheduler 601 and a communication controller 602, so that the communication controller 602 may communicate with the first-layer switch node under scheduling of the scheduler 601. For example, the processor 600 may be any one of or any combination of a central processing unit (central processing unit, CPU), a neural-network processing unit (neural-network processing unit, NPU), an application-specific integrated circuit (application-specific integrated circuit, ASIC), a programmable logic device (programmable logic device, PLD), a complex programmable logic device (complex programmable logic device, CPLD), a field-programmable gate array (field-programmable gate array, FPGA), generic array logic (generic array logic, GAL), a system on chip (system on chip, SoC), a software-defined infrastructure (software-defined infrastructure, SDI) chip, an AI processing chip, and a data processing unit (Data processing unit, DPU).

It should be noted that the architectures of the switch node and the compute node shown in FIG. 2 are merely used as an example for description. During actual application, the switch node and the compute node may alternatively use other architectures, for example, may further include other components. This is not limited.

In the communication network 10 shown in FIG. 1, in addition to the switch nodes at the plurality of layers, another component/another device may be further included. For example, the communication network 10 may further include a network manager (not shown in FIG. 1). The network manager may generate topology information that indicates a topology structure of the communication network 10, and the network manager may further perform corresponding initialization configuration on the switch node at each layer in the communication network 10, for example, configure a hash function used by the first-layer switch node to select a next-hop route. For example, the network manager may be a subnet manager (subnet manager). For another example, the communication network 10 may further include a central controller. The central controller may be configured to specify, for the plurality of compute nodes, at least one second-layer switch node in the communication network 10 to perform reduction computing. In addition, the network manager and the central controller may be deployed on an independent server, or may be deployed on the one or more compute nodes on the edge side. A deployment manner of the network manager and the central controller is not limited in embodiments.

In the communication network 10 shown in FIG. 1, each compute node may access one switch node, or may access a plurality of switch nodes (for example, multi-homing access). In addition, there may be one or more communication links between each compute node and the first-layer switch node, for example, there are two communication links between the compute node 1 and a switch node 101. There may also be one or more communication links between the second-layer switch node and the first-layer switch node, for example, there are four communication links between the switch node 101 and a switch node 201.

The plurality of compute nodes accessing the first-layer switch nodes may collaboratively execute a same periodic compute task. In other words, the plurality of compute nodes may periodically execute a part of task phases in the compute task, and upload, to the communication network, to-be-computed data generated during execution of the part of task phases. For example, when the periodic compute task is specifically a distributed model training task, the to-be-computed data uploaded by the compute node may be specifically a parameter, of an AI model, currently obtained by the compute node through training.

It is assumed that the compute node 1 to a compute node 4 and a compute node 9 to a compute node 12 collaboratively execute a same periodic compute task, and the second-layer switch node 201 computes to-be-computed data uploaded by the compute nodes. If a compute resource of the second-layer switch node 201 is allocated to the compute task, the compute resource is bound to the compute task. In this case, in a process in which the compute nodes execute the compute task and upload the to-be-computed data, the switch node 201 is in a state of waiting for receiving the data corresponding to the compute task for long time. Consequently, the compute resources of the second-layer switch node 201 remain idle for extended periods, and utilization of those compute resources is low.

In view of this, in the communication network shown in FIG. 1, the compute resources of the second-layer switch node 201 are not fixedly allocated to a specific compute task, to avoid low resource utilization caused by static allocation of the compute resources. During specific implementation, the compute node 1 to the compute node 4 and the compute node 9 to the compute node 12 generate a plurality of communication tasks during collaborative execution of the same periodic compute task. For each of the plurality of communication tasks, each compute node sends to-be-computed data to the switch node in the communication network, to request the switch node to perform in-network computing. For example, for a distributed model training task (namely, the foregoing compute task), in each round of iterative training performed on a model, the plurality of compute nodes generate same communication tasks, and send, based on the communication task, a trained model parameter to the switch node in the communication network for allreduce (allreduce) computing. For example, the plurality of compute nodes upload data corresponding to one communication task (referred to as a target communication task below). The compute node 1 to the compute node 4 may send to-be-computed data and an identity (Identity, ID) of the target communication task corresponding to the to-be-computed data to the first-layer switch node 101, and the compute node 9 to the compute node 12 may send to-be-computed data and the ID of the target communication task corresponding to the to-be-computed data to a first-layer switch node 105. In addition, to-be-computed data sent by different compute nodes for the same communication task corresponds to same communication task IDs. The switch node 101 and the switch node 105 may separately compute the received to-be-computed data, to obtain intermediate data, and forward the intermediate data and the target communication task IDs to the second-layer switch node 201. In this case, the switch node 201 computes the received intermediate data corresponding to the same target communication task IDs, to obtain a data compute result, and sends the data compute result to the first-layer switch node 101 and the first-layer switch node 105. Correspondingly, the switch node 101 sends the data compute result to the compute node 1 to the compute node 4 that execute the compute task, and the switch node 105 sends the data compute result to the compute node 9 to the compute node 12 that execute the compute task. In this way, the compute node 1 to the compute node 4 and the compute node 9 to the compute node 12 can continue to execute the periodic compute task based on the received data compute result.

Because the first-layer switch node 101 and the first-layer switch node 105 and the second-layer switch node 201 compute, based on the target communication task IDs, the to-be-computed data uploaded by the plurality of compute nodes on the edge side, compute resources of the switch node 101, the switch node 105, and the switch node 201 do not need to be bound to the periodic compute task executed on the edge side. Therefore, after completing computing based on the target communication task IDs, the switch nodes at the layers may not need to wait for the plurality of compute nodes to upload a next batch of to-be-computed data of the compute task, but may directly compute, using the compute resources, data that is of another compute task and that is uploaded by another compute node. This can reduce duration for which the compute resources of the switch nodes remains idle, to improve utilization of those compute resources, that is, indirectly reduce a concurrency requirement of the switch node.

In other words, after the switch node 201 computes data 1 having a target communication task ID 1 and outputs a data compute result 1, in a process in which the compute node 1 to the compute node 4 and the compute node 9 to the compute node 12 continue to execute a periodic compute task 1 based on the data compute result 1, the switch node 201 may compute data 2 having a target communication task ID 2 and output a data compute result 2. The data compute result 2 may be transmitted to a compute node 5, a compute node 6, and a compute node 13 to the compute node 16, so that the compute nodes continue to execute a periodic compute task 2 based on the data compute result 2. Therefore, the same compute resource of the switch node 201 can perform computing processes for a plurality of compute tasks in a time period in parallel, to improve utilization of the compute resource of the switch node 201.

It should be noted that the communication network shown in FIG. 1 is merely used as an example for description, and is not intended to limit a structure of the communication network. For example, in another possible implementation, the communication network may include more layers of switch nodes, for example, may further include switch nodes at a third layer and a fourth layer. A quantity of switch nodes at each layer may be any quantity. In addition, a quantity of communication links between the compute node and the switch node, a connection manner thereof, a quantity of communication links between switch nodes at different layers, and a connection manner thereof are not limited to the example shown in FIG. 1. For another example, in another possible implementation, there may be a communication link between different switch nodes at a same layer, so that different switch nodes at the same layer may also communicate with each other, for example, traffic bypass. For another example, in another possible implementation, the communication network may further include another device, for example, may further include a device used for resource management (for example, managing communication bandwidth between different switch nodes), and a device used for abnormal status monitoring.

The following describes in detail various non-limiting specific implementations in a communication process.

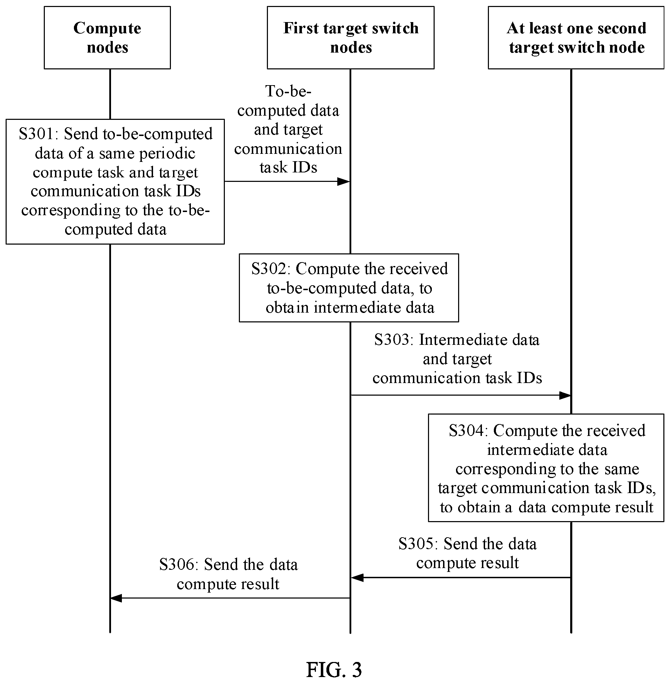

FIG. 3 is a schematic flowchart of a communication method according to an embodiment of this application. The method may be applied to the communication network 10 shown in FIG. 1, or may be applied to another possible communication network. For ease of understanding, the following provides descriptions by using an example in which the method is applied to the communication network 10 shown in FIG. 1. The communication method shown in FIG. 3 may specifically include the following steps.

S301: A plurality of compute nodes send to-be-computed data of a same periodic compute task and target communication task IDs corresponding to the to-be-computed data to a plurality of first-layer first target switch nodes, where the plurality of compute nodes generate a plurality of communication tasks during execution of the compute task, the target communication task ID indicates one of the communication tasks, and the target communication task IDs sent by all the compute nodes are the same.

In this embodiment, the plurality of compute nodes may collaboratively execute the same periodic compute task, for example, a distributed model training task. The plurality of compute nodes may periodically execute a part of task phases in the compute task, and each time the part of task phases are executed, the compute nodes generate corresponding data, which is referred to as to-be-computed data below. In this case, each compute node may generate a corresponding communication task, and upload generated to-be-computed data to the communication network 10 based on the communication task, to request to perform in-network computing in the communication network 10. Specifically, a switch node in the communication network 10 may be requested to reduce the to-be-computed data uploaded by the plurality of compute nodes, for example, reduce the to-be-computed data through allreduce computing. This can reduce transmission resources required for reducing the to-be-computed data of the plurality of compute nodes (in comparison with transmission resources required for reducing the to-be-computed data by compute nodes on an edge side).

In a process of executing the periodic compute task, the plurality of compute nodes periodically generate a plurality of pieces of to-be-computed data, and generate a corresponding communication task for each piece of to-be-computed data. Therefore, for ease of understanding and description, in this embodiment, an example in which the compute nodes upload to-be-computed data for one communication task (referred to as a target communication task below) is used for description. Each compute node may generate a target communication task ID for the to-be-computed data. The target communication task ID indicates a communication task that the compute node sends the to-be-computed data to the switch node used to perform reduction computing in the communication network 10. In addition, the plurality of compute nodes that execute the same compute task generate the same target communication task IDs for the to-be-computed data, so that the switch node can determine to-be-computed data that corresponds to the same target communication task IDs and that is reduced. For example, the target communication task ID may be specifically generated by the framework layer 502 or the communication layer 503 in the compute node.

In the communication network shown in FIG. 1, the plurality of compute nodes that upload the to-be-computed data may be, for example, the compute node 1 to the compute node 4 and the compute node 9 to the compute node 12. Correspondingly, the plurality of first target first-layer switch nodes may be specifically the switch node 101 and the switch node 105.

S302: The plurality of first target first-layer switch nodes compute the received to-be-computed data, to obtain intermediate data.

S303: The plurality of first target switch nodes send the intermediate data and the target communication task IDs to at least one second-layer second target switch node.

In this embodiment, switch nodes at a plurality of layers in the communication network may reduce the to-be-computed data generated by the plurality of compute nodes. The plurality of first target first-layer switch nodes may reduce the received to-be-computed data, to generate intermediate data. Then, each first target switch node forwards generated intermediate data and the corresponding target communication task ID to one or more second-layer switch nodes, to further complete reduction on the intermediate data. For example, it is assumed that in the communication network 10 shown in FIG. 1, the first-layer switch node 101 and the first-layer switch node 105 and the second-layer switch node 201 reduce the to-be-computed data. In this case, the first-layer switch node 101 and the first-layer switch node 105 may perform preliminary reduction computing on the received to-be-computed data, and then send the reduction data obtained through computing to the switch node 201 for final reduction computing.

During specific implementation, the plurality of first target switch nodes may first determine a second target switch node that is in a plurality of switch nodes included in the second layer and that is configured to reduce the intermediate data. For example, the plurality of first target switch nodes may obtain indication information that indicates the second target switch node. For ease of understanding, this embodiment provides the following five implementation examples of determining the second target switch node.

Example 1: Each first target switch node may select a switch node from the plurality of switch nodes included in the second layer, for example, select a second-layer switch node according to a hash function, and the switch node is referred to as a first candidate switch node below. Then, the first target switch node may send a first in-network compute request to the first candidate switch node, to request the first candidate switch node to reduce the intermediate data. In addition, when receiving indication information delivered by the first candidate switch node, the first target switch node determines that the first candidate switch node is the second target switch node. When receiving a change request delivered by the first candidate switch node, the first target switch node may reselect a switch node from the plurality of switch nodes included in the second layer, for example, reselect a second-layer switch node by changing the hash function, and the switch node is referred to as a second candidate switch node below. Then, the first target switch node may send a second in-network compute request to the second candidate switch node, to request the second candidate switch node to reduce the intermediate data. In addition, when receiving indication information delivered by the second candidate switch node, the first target switch node determines that the second candidate switch node is the second target switch node. When receiving a change request delivered by the second candidate switch node, the first target switch node may request another second-layer switch node to reduce the intermediate data based on the foregoing process, until the second target switch node is determined. During actual application, when all the second-layer switch nodes cannot reduce the intermediate data, the first target switch node may indicate the edge side to select a compute node to reduce the to-be-computed data generated by the plurality of compute nodes, or may feed back, to the compute node on the edge side, that the in-network computing request fails, or the like.

Example 2: The second target switch node that performs reduction may be pre-orchestrated by the compute node on the edge side, so that the plurality of compute nodes on the edge side may send a plurality of in-network requests to the plurality of first target first-layer switch nodes, where each compute node may send one in-network request to one first target switch node accessed by the compute node. The in-network request received by the first target switch node may carry indication information that indicates the second target switch node that reduces the intermediate data. Therefore, each first target switch node may parse the received in-network request to obtain the indication information, and determine, based on the indication information, the second target switch node that reduces the intermediate data.

For example, the second target switch node that is in the communication network 10 and that is used to compute the intermediate data may be specifically pre-orchestrated by the framework layer 502 or the communication layer 503 in the compute node.

Example 3: The first target switch nodes may determine that all second-layer switch nodes that are communicatively connected to the first target switch nodes are second target switch nodes. In this case, there may be a plurality of second target switch nodes, that is, the plurality of second-layer switch nodes may collaboratively complete reduction on the intermediate data.

Example 4: The communication network 10 shown in FIG. 1 may further include a central controller (not shown in FIG. 1), and the central controller may pre-orchestrate, for the plurality of compute nodes, a second target switch node that is configured to reduce the intermediate data, and notify the plurality of compute nodes on the edge side of the second target switch node. Then, the plurality of compute nodes on the edge side may send a plurality of in-network requests to the plurality of first target first-layer switch nodes, and the in-network request may carry indication information that indicates the second target switch node that reduces the intermediate data. Therefore, each first target switch node may parse the received in-network request to obtain the indication information, and determine, based on the indication information, the second target switch node that reduces the intermediate data.

Example 5: The communication network 10 shown in FIG. 1 may further include a central controller (not shown in FIG. 1), and the central controller may determine the second target switch node that is configured to reduce the intermediate data, and notify each first target first-layer switch node of the second target switch node, so that each first target switch node can learn of the second target switch node that performs reduction.

Certainly, the foregoing plurality of implementations of determining the second target switch node are merely used as some examples for description. During actual application, the first target switch node may alternatively determine the at least one second-layer second target switch node in another manner. This is not limited.

After the second target switch node is determined, the plurality of first target switch nodes may forward the intermediate data obtained by computing the to-be-computed data to the second target switch node, and the first target switch nodes also send the target communication task IDs corresponding to the to-be-computed data to the second target switch node. The first target switch nodes may send the intermediate data and the target communication task IDs to the second target switch node together; or the first target switch nodes may send requests including the target communication task IDs to the second target switch node, and after the second target switch node receives the requests (indicating that the second target switch node is a device that computes the intermediate data), the first target switch nodes send the intermediate data to the second target switch node.

S304: The at least one second-layer second target switch node computes the received intermediate data corresponding to the same target communication task IDs, to obtain a data compute result.

In this embodiment, the second target switch node computes the intermediate data at a granularity of a communication task. During specific implementation, the second target switch node may first determine a plurality of pieces of intermediate data corresponding to the same target communication task IDs. Each piece of intermediate data comes from one first-layer switch node. Therefore, the second target switch node may compute the plurality of pieces of intermediate data, for example, reduce the plurality of pieces of intermediate data, to generate a corresponding data compute result.

For example, it is assumed that to-be-computed data sent by the compute node 1 to the compute node 4 and the compute node 9 to the compute node 12 is sequentially 1, 5, -2, 3, 8, -7, 5, and 3. The first-layer switch node 101 may compute the received data 1, 5, -2, and 3, to obtain an average value of 7/4 (namely, the intermediate data), and the switch node 105 may compute the received data 8, -7, 5, and 3, to obtain an average value of 9/4 (namely, the intermediate data). The second-layer switch node 201 may compute the received intermediate data 7/4 and 9/4, to obtain an average value 2 (namely, the data compute result) through computing.

When there are a plurality of second target switch nodes, the plurality of second target switch nodes may collaboratively complete a computing process for the intermediate data. For example, when sending the intermediate data to the plurality of second target switch nodes, each first target switch node may pre-divide each piece of intermediate data into a plurality of subsets based on a quantity of second target switch nodes, so that each first target switch node may send one subset of each piece of intermediate data to one second target switch node, and the plurality of subsets received by the plurality of second target switch nodes are one complete piece of intermediate data. Correspondingly, each second target switch node may perform computing based on the plurality of subsets corresponding to the plurality of pieces of intermediate data, and generate a corresponding data compute result. Data compute results generated by the plurality of second target switch nodes are summarized, to obtain a complete data compute result through computing for the plurality of pieces of intermediate data.

For example, it is assumed that intermediate data generated by the plurality of first target switch nodes is sequentially {1, -3}, {5, -2}, {-2, -7}, {3, 4}, {8, 4}, {-7, -8}, {5, 3}, and {3, 1}, and there are two second target switch nodes: a switch node 201 and a switch node 202. In this case, the plurality of first target switch nodes may send a subset A: 1, 5, -2, 3, 8, -7, 5, 3 of the intermediate data to the switch node 201, and send the subset B: -3, -2, -7, 4, 4, -8, 3, 1 of the to-be-computed node to the switch node 202. The switch node 201 may compute the subset A of the intermediate data, to obtain an average value (that is, a data compute result generated by the switch node 201) of 2, and the switch node 202 may compute the subset B of the intermediate data, to obtain an average value (that is, a data compute result generated by the switch node 202) of -1. Therefore, after the data compute results generated by the switch node 201 and the switch node 202 are summarized, an obtained data compute result is {2, -1}.

S305: The at least one second target switch node sends the data compute result to the plurality of first target switch nodes.

S306: The plurality of first target switch nodes send the data compute result to the plurality of compute nodes that execute the periodic compute task.

In this embodiment, after generating the data compute result, the second target switch node may send the data compute result to each first target switch node. Therefore, each first target switch node may forward the data compute result to one or more compute nodes (that participate in executing the periodic compute task) accessed by the first target switch node, to meet a requirement of each compute node for the data compute result during execution of the compute task.

During actual application, after receiving the data compute result, that is, after completing execution of task content of the compute task in a current period, the compute nodes may continue to execute task content in a next period based on the data compute result, and generate new to-be- computed data in the next period. In a process in which the compute nodes generate new to-be-computed data and upload the new to-be-computed data to the communication network 10, the first target switch nodes and the second target switch node may compute data that is uploaded by other compute nodes (for example, the compute node 5 to the compute node 8) and that corresponds to same target communication task IDs, and return a corresponding data compute result to the other compute nodes. When the switch nodes at the layers compute data corresponding to different target communication task IDs, same compute resources may be used. This can effectively reduce duration for which the compute resources of the second target switch node remain idle, to improve utilization of those compute resources. In a period of time, the second target switch node may support in-network compute processes for a plurality of parallel compute tasks, to indirectly reduce a concurrency requirement of the second target switch node.

In the embodiment shown in FIG. 3, a process in which the switch nodes at the layers compute, at a granularity of a communication task, to-be-computed data uploaded by the plurality of compute nodes is mainly described. For ease of understanding, the following uses five specific scenarios as examples to describe the in-network compute process performed by the second target switch node.

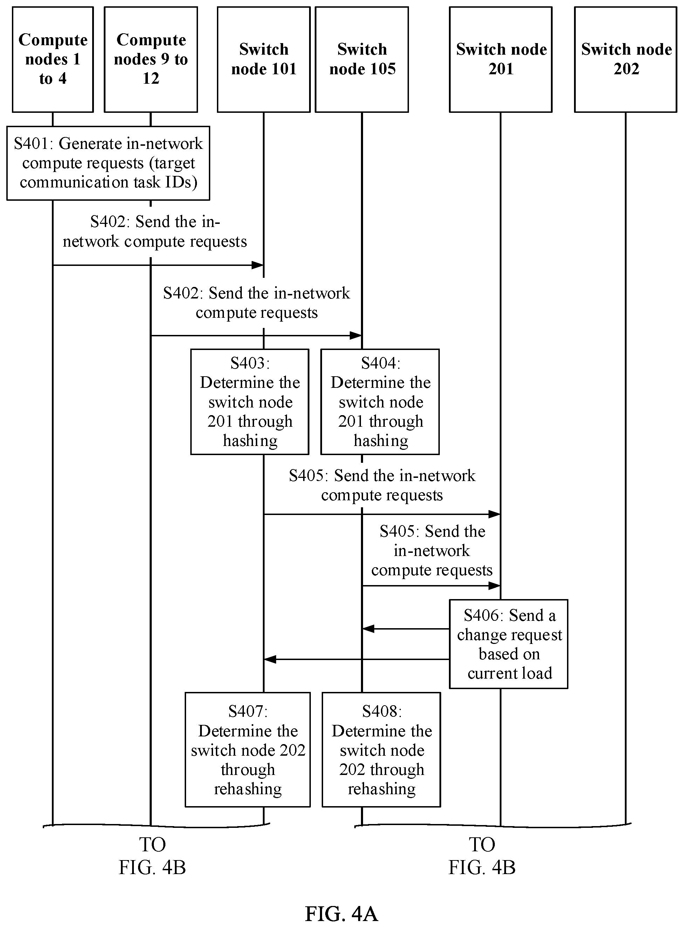

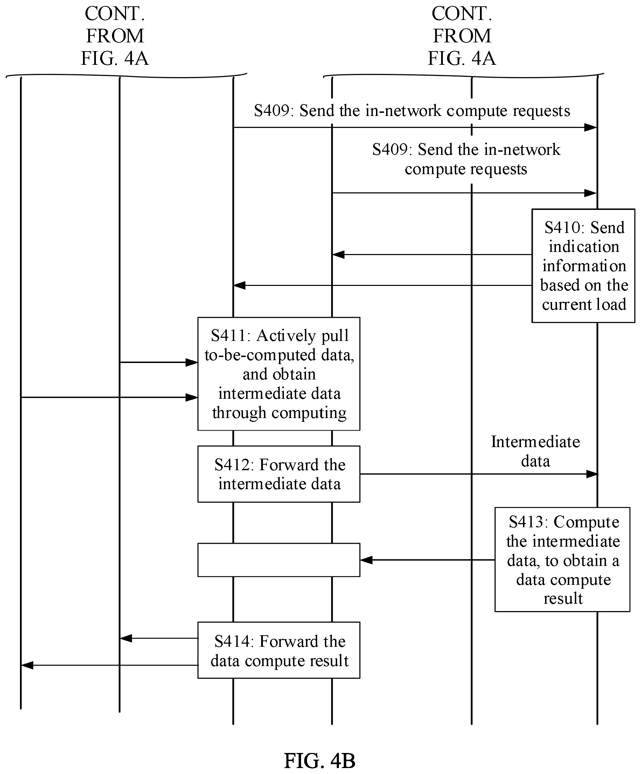

FIG. 4A and FIG. 4B are a schematic flowchart of another communication method. In the communication method shown in FIG. 4A and FIG. 4B, a second-layer switch node configured to perform in-network computing may be selected from the communication network 10 through rehashing. In addition, it is specified that the compute node 1 to the compute node 4 and the compute node 9 to the compute node 12 collaboratively execute a same periodic compute task in this embodiment.

As shown in FIG. 4A and FIG. 4B, the method may specifically include the following steps.

S401: Before uploading to-be-computed data, the compute node 1 to the compute node 4 and the compute node 9 to the compute node 12 each generate an in-network compute request, where the in-network compute request generated by each compute node includes a target communication task ID, and in-network compute requests generated by different compute nodes include same target communication task IDs.

In this embodiment, the compute node 1 to the compute node 4 and the compute node 9 to the compute node 12 generate a plurality of communication tasks in a process of collaboratively executing the same periodic compute task. For each of the plurality of communication tasks, each compute node sends to-be-computed data to a switch node in the communication network, to request the switch node to perform in-network computing. For example, the plurality of compute nodes upload data corresponding to one of the communication tasks (referred to as a target communication task below). Each compute node may first generate the target communication task ID. The target communication task ID indicates a communication task of sending data to some second-layer switch nodes, and the target communication task IDs generated by different compute nodes are the same, and indicate the communication network 10 to compute the to-be-computed data uploaded by the plurality of compute nodes for a same communication task.

The plurality of compute nodes that are configured to execute the same compute task may be pre-specified by a user, or may be scheduled by a network manager (not shown in FIG. 1) in the communication network 10 to execute the compute task, or the like. This is not limited in this embodiment.

S402: The compute node 1 to the compute node 4 send the generated in-network compute requests to the first-layer switch node 101, and the compute node 9 to the compute node 12 send the generated in-network compute requests to the first-layer switch node 105.

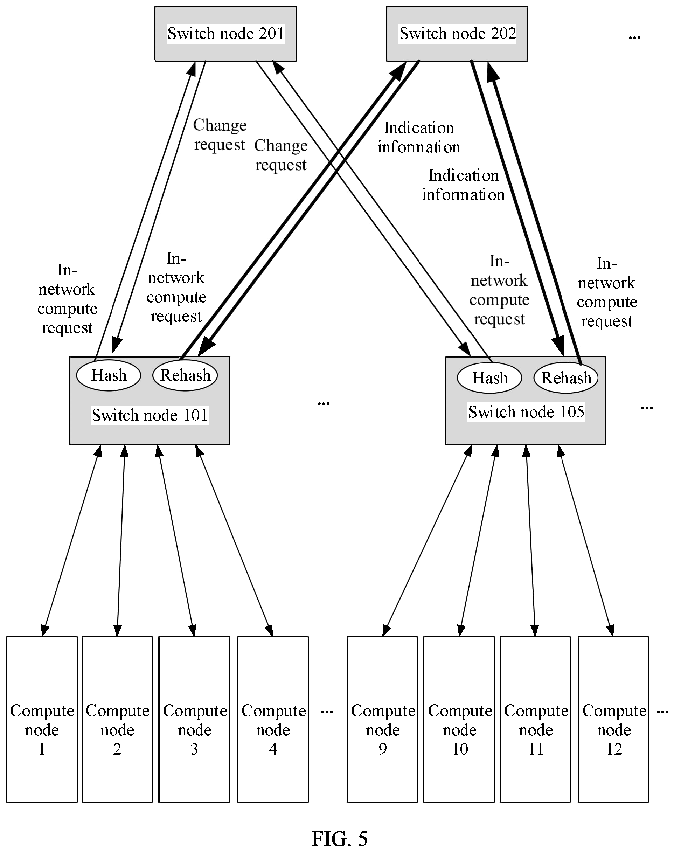

Each compute node may send the generated in-network compute request to the first-layer switch node accessed by the compute node, as shown in FIG. 5.

S403: After receiving the in-network compute request, the switch node 101 performs a hash operation based on the target communication task ID in the in-network compute request, to obtain a hash value, and determines, from second-layer switch nodes connected to the switch node 101, a switch node 201 corresponding to the hash value.

S404: After receiving the in-network compute request, the switch node 105 performs a hash operation based on the target communication task ID in the in-network compute request, to obtain a hash value, and determines, from second-layer switch nodes connected to the switch node 105, the switch node 201 corresponding to the hash value.

The switch node 101 and the switch node 105 may be configured with a plurality of same hash functions. For example, the plurality of hash functions may be configured by the network manager when each first-layer switch node in the communication network is initialized. In addition, the network manager may alternatively configure each first-layer switch node to select a hash function according to a same policy, to perform a hash operation on the target communication task ID. Therefore, for the same target communication task IDs, different switch nodes may perform hash operations on the target communication task IDs according to a same hash function, and obtain same hash values.

After obtaining the hash value, the switch node 101 may determine, based on the hash value from a plurality of second-layer switch nodes that are connected to the switch node 101, a switch node (or referred to as selecting a path to the second layer through hashing) that is configured to compute intermediate data.

Specifically, the second-layer switch nodes that are connected to the switch node 101 include the switch node 201 and a switch node 202. In this case, the switch node 101 may perform, based on the hash value, a modulo operation on a quantity of second-layer switch nodes that are connected to the switch node 101, that is, the switch node 101 performs a modulo operation on the quantity 2 based on the hash value. When a remainder is 1, the switch node 101 may determine that the switch node corresponding to the hash value is the switch node 201. When the remainder is 0, the switch node 101 may determine that the switch node corresponding to the hash value is the switch node 202. In this embodiment, an example in which the switch node corresponding to the hash value is the switch node 201 is used for description.

In a manner similar to the foregoing, the switch node 105 may determine a same switch node, namely, the switch node 201, based on the same hash value.

During actual application, after performing hash operations on the target communication task IDs according to the hash function, the switch node 101 and the switch node 105 may correspondingly store an identity of the hash function and the target communication task ID, for example, may locally store the identity of the hash function and the target communication task ID in the switch node in a form of Table 1.

**Table 1**

| Target communication task ID | Identity of a hash function |
|---|---|
| Identity 1 | Function 1 |
| ... | ... |

S405: The switch node 101 and the switch node 105 send in-network compute requests to the switch node 201, to request the switch node 201 to compute the intermediate data, where the in-network compute request includes the target communication task ID.

As shown in FIG. 5, each switch node may send an in-network compute request to the switch node 201 determined based on the hash operation.

S406: The switch node 201 sends a change request to the switch node 101 and the switch node 105 based on current load, where the change request indicates the switch node 101 and the switch node 105 to change the second-layer switch node that processes the intermediate data.

In an implementation example, the switch node 201 may read a quantity of currently responded requests from an internal register, and predict, based on the quantity of currently responded requests, whether a total quantity of requests that are simultaneously responded to exceeds a concurrent line rate range of the switch node 201 after continuing to respond to the in-network compute request sent by the switch node 101/switch node 105. A line rate is a data amount that can be transmitted by a port of the switch node per unit time. Usually, when responding to a request, the switch node 201 may receive, using some resources (for example, some ports), a data flow corresponding to the request, and occupy one line rate per unit time. A concurrent line rate means a quantity of data flows that can be concurrently transmitted by the switch node per unit time during data transmission.

If the switch node 201 predicts that the total quantity of responded requests exceeds the concurrent line rate range supported by the switch node 201, it indicates that load of the switch node 201 is excessively high and exceeds a range that can be borne by the switch node 201 if the switch node 201 responds to the in-network compute request. In this case, the switch node 201 may send the change request to the switch node 101 and the switch node 105, to indicate the switch node 101 and the switch node 105 to reselect and request another second-layer switch node to compute the intermediate data.

If the switch node 201 predicts that the total quantity of responded requests does not exceed the concurrent line rate range supported by the switch node 201, the switch node 201 may respond to the in-network compute requests sent by the switch node 101 and the switch node 105, and start to process intermediate data subsequently sent by the switch node 101 and the switch node 105.

In this embodiment, an example in which the switch node 201 refuses to respond to the in-network compute requests and sends the change request to the switch node 101 and the switch node 105 is used for description.

In this case, the switch node 201 may locally record the target communication task ID and the quantity of first-layer switch nodes that participate in the requests (the sent in-network compute requests include the same target communication task IDs), where the ID and the quantity are obtained by parsing the in-network compute request, and record, based on a bitmap (bitmap), the first-layer switch node that currently sends the in-network compute request to the switch node 201. For example, the switch node 201 may record, in Table 2, the target communication task ID, the quantity of first-layer switch nodes that participate in the requests, and the bitmap.

**Table 2**

| Target communication task ID | Quantity of switch nodes that participate in requests | Bitmap |
|---|---|---|
| Identity 1 | Quantity X | Bitmap data |
| ... | ... | ... |

In this way, when it is determined, based on the bitmap, that a quantity of in-network compute requests received by the switch node 201 reaches the quantity of switch nodes that participate in the requests, a network address at a peer end of a corresponding port (port) may be searched for from a routing table based on the bitmap, that is, network addresses of the switch node 101 and the switch node 105 that send the in-network compute requests to the switch node 201. Therefore, the switch node 201 may send a change request to the switch node 101 and the switch node 105 based on the network addresses obtained through searching, as shown in FIG. 5. For example, the network address may be an Internet protocol (Internet Protocol, IP) address.

S407: After receiving the change request, the switch node 101 performs a hash operation on the target communication task ID according to a new hash function, to obtain a new hash value, and determines, from second-layer switch nodes connected to the switch node 101, the switch node 202 corresponding to the new hash value.

S408: After receiving the change request, the switch node 105 performs a hash operation on the target communication task ID according to a new hash function, to obtain a new hash value, and determines, from second-layer switch nodes connected to the switch node 105, the switch node 202 corresponding to the new hash value.

Because the switch node 101 and the switch node 105 are configured with same hash functions, and the hash functions are selected according to same policies, after performing the hash operations on the target communication task IDs again, both the switch node 101 and the switch node 105 select the switch node 202 from the switch nodes based on the new hash value.

During specific implementation, the switch node 101 and the switch node 105 may reselect a hash function based on a correspondence between the identity of the hash function and the target communication task ID and that are stored locally. The selected hash function is different from the hash function indicated in Table 1. Then, the switch node 101 and the switch node 105 may perform hash operations on the target communication task IDs according to the reselected hash function, to obtain a new hash value, and perform a modulo operation based on the new hash value, to determine the switch node 202 based on a value obtained through modulo.

Further, the switch node 101 and the switch node 105 may further correspondingly store an identity of the hash function used for performing the hash operation and the target communication task ID, for example, may continue to record the target communication task ID and the identity of the hash function in Table 1. Therefore, if a change request sent by the switch node 202 is received subsequently, the switch node 101 and the switch node 105 may reselect, based on the identity of the hash function recorded for the target communication task ID, a new hash function used to perform a new hash operation.

S409: The switch node 101 and the switch node 105 send in-network compute requests to the switch node 202, to request the switch node 202 to compute the intermediate data, where the in-network compute request includes the target communication task ID.

As shown in FIG. 5, each switch node may send an in-network compute request to the switch node 202 determined again based on the hash operation.

S410: The switch node 202 sends indication information to the switch node 101 and the switch node 105 based on current load, where the indication information indicates the switch node 202 to compute the intermediate data, that is, indicate the switch node 202 to respond to the in-network compute requests sent by the switch node 101 and the switch node 105.

For example, the indication information may be notification information sent by the switch node 202, or may be information of another type. This is not limited.

S411: After receiving the indication information, the switch node 101 and the switch node 105 actively pull the to-be-computed data from the compute node 1 to the compute node 4 and the compute node 9 to the compute node 12.

S412: The switch node 101 and the switch node 105 compute the pulled to-be-computed data, to obtain intermediate data, and send the intermediate data to the switch node 202.

In this case, the intermediate data received by the switch node 202 from the switch node 101 and the switch node 105 is intermediate data of a same communication task, that is, corresponding to same target communication task IDs.

S413: The switch node 202 computes the received intermediate data, to obtain a corresponding data compute result, and sends the data compute result to the switch node 101 and the switch node 105.

For example, the switch node 202 may reduce the intermediate data, to generate a corresponding result.

S414: The switch node 101 forwards the data compute result to the compute node 1 to the compute node 4, and the switch node 105 forwards the data compute result to the compute node 9 to the compute node 12.

During actual application, the compute node 1 to the compute node 4 and the compute node 9 to the compute node 12 may continue to execute the periodic compute task based on the received data compute result. In addition, when generating new to-be-computed data for the compute task, the compute nodes may request, based on the process shown in FIG. 4A and FIG. 4B, the switch node in the communication network 10 to perform in-network computing again. When the plurality of compute nodes request the switch node in the communication network 10 to perform in-network computing on the new to-be-computed data again, the second-layer switch node that performs in-network computing may still be the switch node 202, or may be the switch node 201. Specifically, the switch node 101 and the switch node 105 may determine the switch node again based on the foregoing process.

This can effectively reduce duration for which compute resources of the switch node in the communication network 10 remain idle, to improve utilization of those compute resources. In addition, the foregoing process does not need to be controlled by a single node, to avoid a problem that the compute resource of the switch node cannot be released for long time due to a failure of the single node. In addition, the switch node used to perform in-network computing is selected through hashing, to help implement load balancing for a plurality of second-layer switch nodes in the communication network 10.

It should be noted that an execution sequence of the steps shown in FIG. 4A and FIG. 4B is merely used as an example for description, and is not intended for limitation. For example, in another possible embodiment, step S403 and step S404 may be performed in parallel, or step S404 may be performed before step S403.

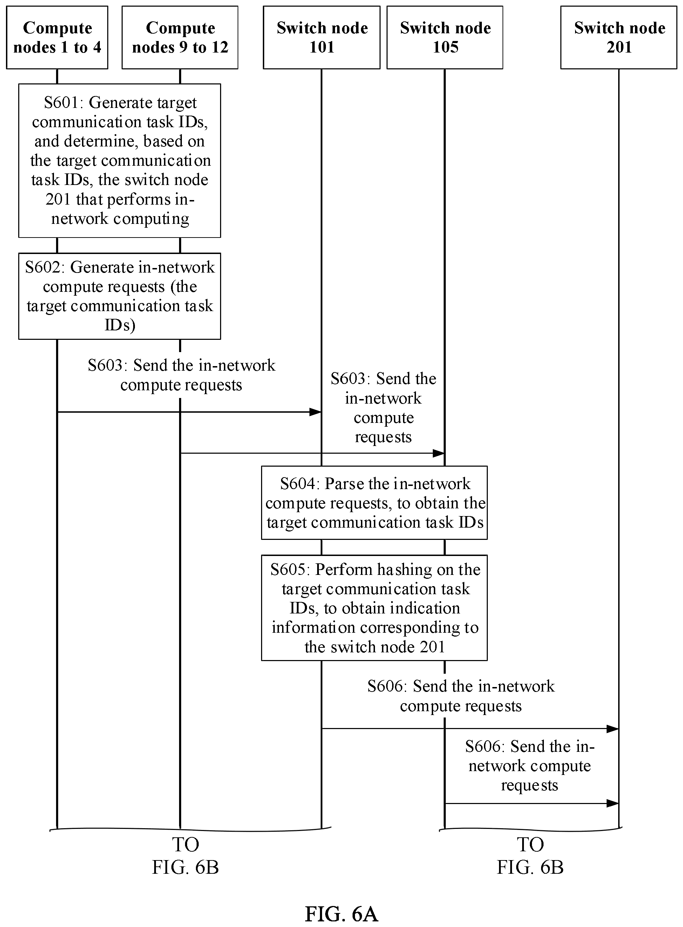

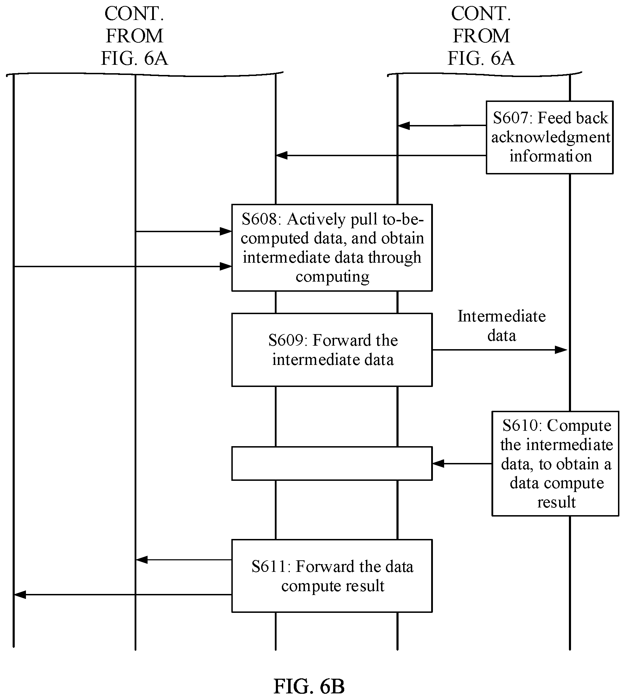

In the embodiment shown in FIG. 4A and FIG. 4B, the switch node 101 and the switch node 105 determine, based on the hash operation, the switch node 202 that performs in-network computing from the second-layer switch nodes. In another embodiment, the compute node on the edge side may alternatively pre-orchestrate the switch node that performs in-network computing. The following provides example descriptions with reference to FIG. 6A and FIG. 6B.

FIG. 6A and FIG. 6B are a schematic flowchart of another communication method. In the communication method shown in FIG. 6A and FIG. 6B, it is specified that the compute node 1 to the compute node 4 the compute node 9 to the compute node 12 collaboratively execute a same periodic compute task.

As shown in FIG. 6A and FIG. 6B, the method may specifically include the following steps.

S601: Before uploading to-be-computed data, the compute node 1 to the compute node 4 and the compute node 9 to the compute node 12 generate target communication task IDs, where it is determined based on the target communication task IDs that a second-layer switch node that performs in-network computing is a switch node 201.

In this embodiment, the compute node 1 to the compute node 4 and the compute node 9 to the compute node 12 on an edge side may pre-orchestrate, according to a unified policy, the switch node that performs in-network computing in the communication network 10.

In an implementation example, the communication network 10 may include a network manager. In an initialization phase of the communication network 10, the network manager may obtain a topology structure of the communication network 10; obtain line rate aggregation performance of each second-layer switch node, for example, obtain a quantity of concurrently transmitted data flows that can be supported by each switch node per unit time during data transmission; and configure a plurality of same hash functions and hash function selection policies for hash functions for first-layer switch nodes. Then, the network manager may provide the line rate aggregation performance of each second-layer switch node, the hash function and the selection policy that are configured for each first-layer switch node, and the topology structure of the communication network 10 for each edge compute node.

In this way, each compute node on the edge side may select from second-layer switch nodes based on the topology structure of the communication network 10 and a requirement of the compute task for the line rate aggregation performance of the switch node, to obtain switch nodes that meet the requirement for the line rate aggregation performance. Then, the compute node may create the target communication task ID; select a corresponding hash function according to the hash function and the selection policy configured for each switch node, to perform a hash operation on the target communication task ID, so as to obtain a hash value; and determine, based on the hash value, the switch node that performs in-network computing from the selected switch nodes included in the second layer. For ease of understanding, in this embodiment, an example in which the switch node 201 performs in-network computing is used for description.

In addition, the compute node 1 to the compute node 4 and the compute node 9 to the compute node 12 each generate a plurality of communication tasks in a process of collaboratively executing a same periodic compute task. For each of the plurality of communication tasks, each compute node sends to-be-computed data to a switch node in the communication network, to request the switch node to perform in-network computing. In this embodiment, an example in which the plurality of compute nodes upload corresponding to-be-computed data for a target communication task (one of the communication tasks) is used for description.

S602: The compute node 1 to the compute node 4 and the compute node 9 to the compute node 12 each generate an in-network compute request, where the in-network compute request generated by each compute node includes a target communication task ID, and in-network compute requests generated by different compute nodes include same target communication task IDs.

S603: The compute node 1 to the compute node 4 send the generated in-network compute requests to the first-layer switch node 101, and the compute node 9 to the compute node 12 send the generated in-network compute requests to the first-layer switch node 105.

S604: The switch node 101 and the switch node 105 parse the received in-network compute requests, to obtain the target communication task IDs.

S605: The switch node 101 and the switch node 105 perform hash operations on the target communication task IDs, to obtain indication information, where the indication information indicates the switch node 201 to compute intermediate data.

S606: The switch node 101 and the switch node 105 send in-network compute requests to the switch node 201 based on the indication information, where the in-network compute request includes the target communication task ID.

S607: The switch node 201 feeds back acknowledgment information to the switch node 101 and the switch node 105, to notify the switch node 101 and the switch node 105 of acknowledgment of performing in-network computing.

S608: After receiving the acknowledgment information, the switch node 101 and the switch node 105 actively pull the to-be-computed data from the compute node 1 to the compute node 4 and the compute node 9 to the compute node 12.

S609: The switch node 101 and the switch node 105 compute the pulled to-be-computed data, to obtain intermediate data, and send the intermediate data to the switch node 201.

In this case, the intermediate data received by the switch node 201 from the switch node 101 and the switch node 105 is intermediate data of a same communication task, that is, corresponding to same target communication task IDs.

S610: The switch node 201 computes the received intermediate data, to obtain a corresponding data compute result, and sends the data compute result to the switch node 101 and the switch node 105.

For example, the switch node 201 may reduce the intermediate data, to generate a corresponding result.

S611: The switch node 101 forwards the data compute result to the compute node 1 to the compute node 4, and the switch node 105 forwards the data compute result to the compute node 9 to the compute node 12.

For specific implementation processes of step S602 to step S611, refer to related descriptions of step S401 to step S404 and step S411 to step S414 in the embodiment shown in FIG. 4A and FIG. 4B. Details are not described herein again.

This can effectively reduce duration for which compute resources of the switch node 201 remain idle, to improve utilization of those compute resources. In addition, the foregoing process does not need to be controlled by a single node, avoiding failures of the single node that could prevent the compute resources of the switch node 201 from being released for an extended period.

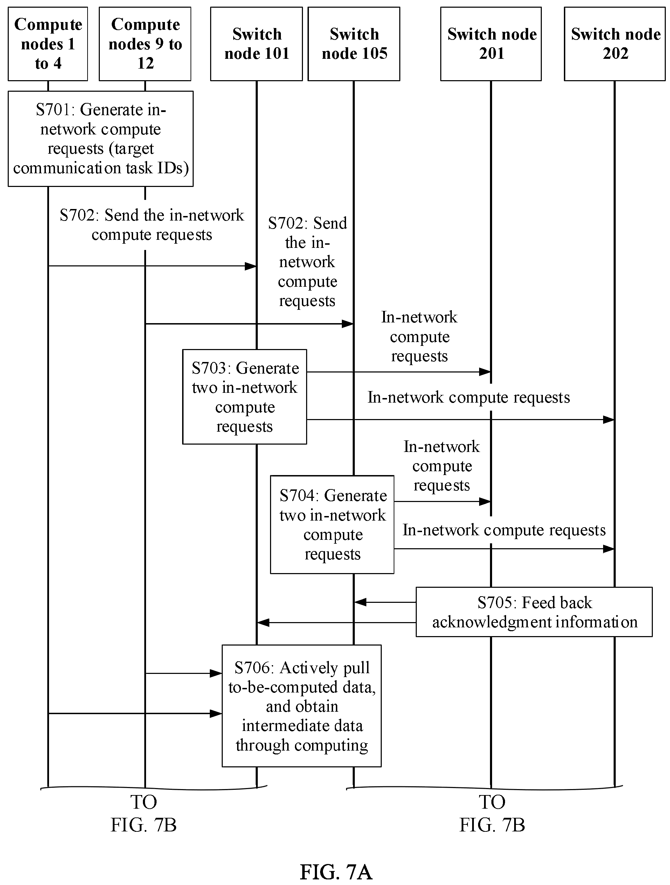

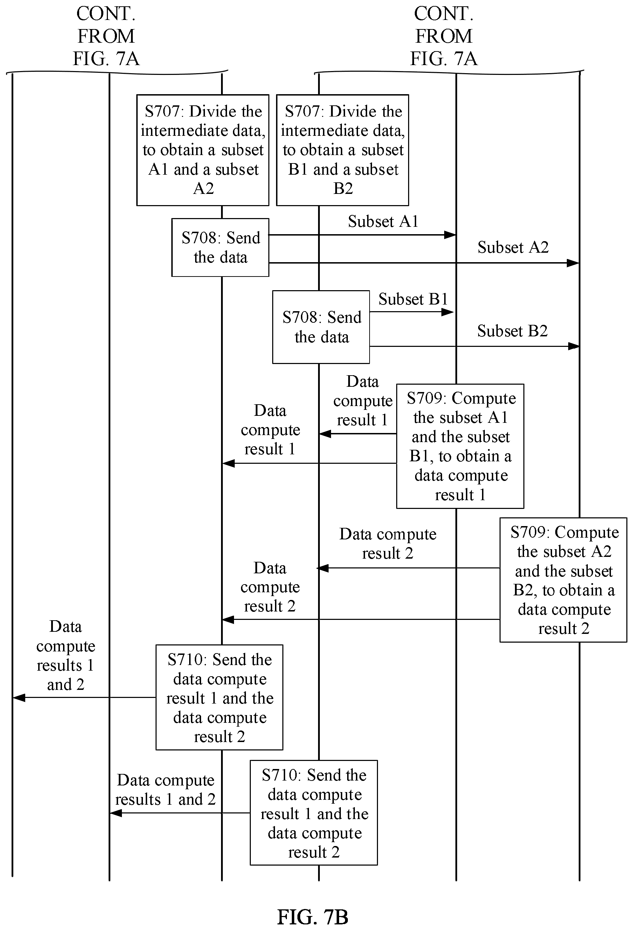

In the embodiments shown in FIG. 4A and FIG. 4B and FIG. 6A and FIG. 6B, an example in which one second-layer switch node performs the in-network computing process is used for description. In another possible embodiment, a plurality of second-layer switch nodes may perform in-network computing on intermediate data for same target communication task IDs. The following provides example descriptions with reference to FIG. 7A and FIG. 7B.

FIG. 7A and FIG. 7B are a schematic flowchart of another communication method. In the communication method shown in FIG. 7A and FIG. 7B, it is specified that the compute node 1 to the compute node 4 the compute node 9 to the compute node 12 collaboratively execute a same periodic compute task.

As shown in FIG. 7A and FIG. 7B, the method may specifically include the following steps.

S701: Before uploading to-be-computed data, the compute node 1 to the compute node 4 and the compute node 9 to the compute node 12 each generate an in-network compute request, where the in-network compute request generated by each compute node includes a target communication task ID, and in-network compute requests generated by different compute nodes include same target communication task IDs.

In this embodiment, the compute node 1 to the compute node 4 and the compute node 9 to the compute node 12 each generate a plurality of communication tasks in a process of collaboratively executing a same periodic compute task. For each of the plurality of communication tasks, each compute node sends to-be-computed data to a switch node in the communication network, to request the switch node to perform in-network computing. For ease of understanding and description, in this embodiment, an example in which the plurality of compute nodes upload corresponding to-be-computed data for a target communication task (one of the communication tasks) is used for description.

S702: The compute node 1 to the compute node 4 send the generated in-network compute requests to a first-layer switch node 101, and the compute node 9 to the compute node 12 send the generated in-network compute requests to a first-layer switch node 105.

S703: After receiving the in-network compute requests, the switch node 101 generates two in-network compute requests based on a quantity of second-layer switch nodes connected to the switch node 101, and sends the in-network compute requests to a switch node 201 and a second-layer switch node 202, where each in-network compute request includes the target communication task ID.

S704: After receiving the in-network compute requests, the switch node 105 generates two in-network compute requests based on a quantity of second-layer switch nodes that are connected to the switch node 105, and sends the in-network compute requests to the switch node 201 and the second-layer switch node 202.

In this embodiment, the first-layer switch node 101 and the first-layer switch node 105 are both connected to the switch node 201 and the second-layer switch node 202. In this case, after receiving the in-network compute requests sent by the compute nodes on an edge side, the switch node 101 and the switch node 105 may generate a plurality of in-network compute requests based on a quantity of second-layer switch nodes that are connected to the switch node 101 and the switch node 105. Each in-network compute request includes the target communication task ID, and different in-network compute requests include same target communication task IDs. Then, the switch node 101 and the switch node 105 may each send an in-network compute request to each second-layer switch node that is connected to the switch node 101 and the switch node 105, to request the plurality of second-layer switch nodes to perform in-network computing.

S705: The switch node 201 feeds back acknowledgment information to the switch node 101 and the switch node 105, and the switch node 202 feeds back acknowledgment information to the switch node 101 and the switch node 105, to notify the switch node 101 and the switch node 105 of acknowledgment of performing in-network computing.

S706: After receiving the acknowledgment information, the switch node 101 and the switch node 105 actively pull the to-be-computed data from the compute node 1 to the compute node 4 and the compute node 9 to the compute node 12.

S707: The switch node 101 computes the pulled to-be-computed data, to obtain intermediate data, and divides, based on the quantity of second-layer switch nodes that are connected to the switch node 101, the intermediate data obtained through computing into two subsets: a subset A1 and a subset A2; and the switch node 105 divides, based on the quantity of second-layer switch nodes that are connected to the switch node 105, intermediate data obtained through computing into two subsets: a subset B1 and a subset B2.

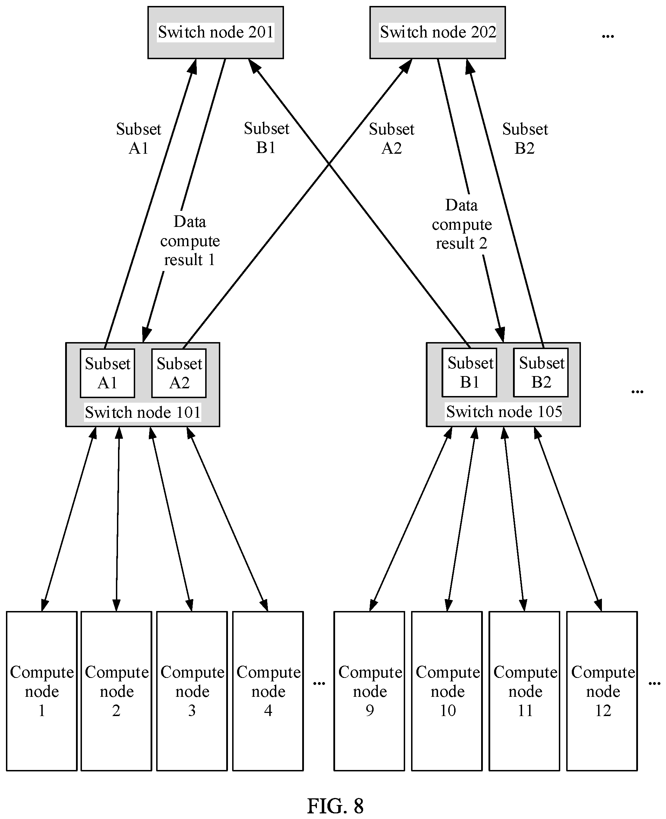

In this embodiment, because the plurality of second-layer switch nodes (namely, the switch node 201 and the switch node 202) perform in-network computing, the switch node 101 may divide intermediate data generated based on the to-be-computed data uploaded by the compute node 1 to the compute node 4 into two subsets: a subset A1 and a subset A2, as shown in FIG. 8. For example, it is assumed that the intermediate data generated by the switch node 101 is {1, -3}, {5, -2}, {-2, -7}, {3, 4}. In this case, the switch node 101 may divide the intermediate data into a subset A1 {1, 5, -2, 3} and a subset A2 {-3, -2, -7, 4}.

In addition, the switch node 105 also divides intermediate data generated based on the to-be-computed data uploaded by the compute node 9 to the compute node 12 into two subsets: a subset B1 and a subset B2, as shown in FIG. 8. For example, it is assumed that the intermediate data generated by the switch node 105 is {8, 4}, {-7, -8}, {5, 3}, {3, 1}. In this case, the switch node 101 may divide the intermediate data into a subset B1 {8, -7, 5, 3} and a subset B2 {4, -8, 3, 1}.

S708: The switch node 101 sends the subset A1 to the switch node 201, and sends the subset A2 to the switch node 202, and the switch node 105 sends the subset B1 to the switch node 201, and sends the subset B2 to the switch node 202.

In this case, the intermediate data received by the switch node 201 and the switch node 202 is intermediate data of a same communication task, that is, corresponding to same target communication task IDs. In addition, results obtained by computing the received intermediate data by the switch node 201 and the switch node 202 are results obtained through computing based on all data uploaded by the compute node 1 to the compute node 4 and the compute node 9 to the compute node 12.

S709: The switch node 201 computes the received subset A1 and subset B1, to obtain a corresponding data compute result 1, and sends the data compute result 1 to the switch node 101 and the switch node 105; and the switch node 202 computes the received subset A2 and subset B2, to obtain a corresponding data compute result 2, and sends the data compute result 2 to the switch node 101 and the switch node 105.

For example, the switch node 201 and the switch node 202 may reduce the received intermediate data, to generate corresponding results.

S710: The switch node 101 forwards the data compute result 1 and the data compute result 2 to the compute node 1 to the compute node 4, and the switch node 105 forwards the data compute result 1 and the data compute result 2 to the compute node 9 to the compute node 12.

In this way, each compute node can obtain the data compute result 1 and the data compute result 2, so that after performing an operation like gathering on the data compute result 1 and the data compute result 2, the compute node can obtain a final data compute result required by the compute node.

For a specific implementation process of each step in this embodiment, refer to descriptions of a related step in the foregoing embodiments. Details are not described herein again.

This can effectively reduce time in which compute resources of the switch node 201 and the switch node 202 are in an idle state, to improve utilization of the compute resources of the switch node 201 and the switch node 202. In addition, the foregoing process does not need to be controlled by a single node, to avoid a problem that the compute resources of the switch node 201 and the switch node 202 cannot be released for long time due to a failure of the single node. In this case, the switch node 201 and the switch node 202 perform in-network computing in parallel. In comparison with a single switch node performing in-network computing, this can effectively improve in-network computing efficiency.

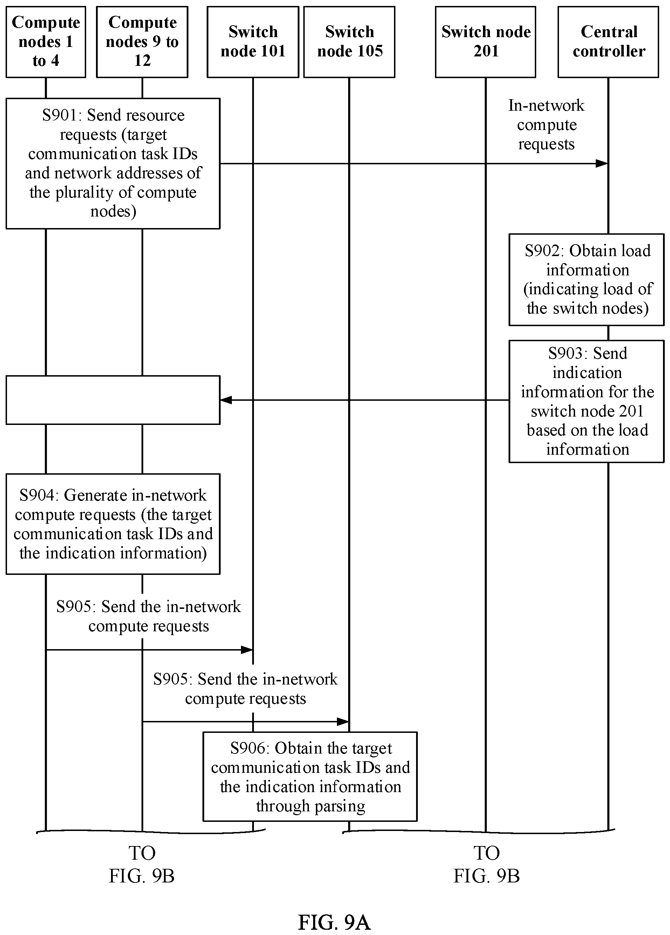

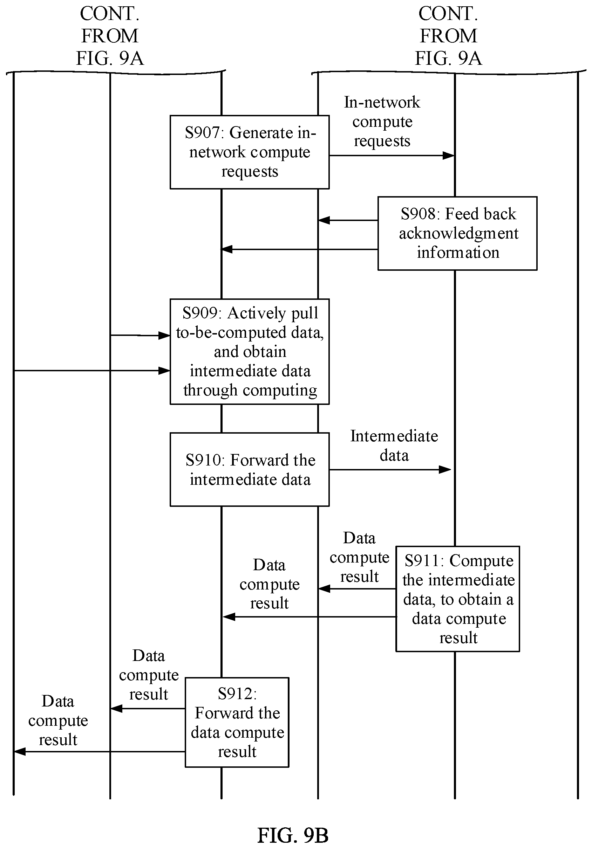

In the embodiments shown in FIG. 4A and FIG. 4B, FIG. 6A and FIG. 6B, and FIG. 7A and FIG. 7B, the switch node that performs in-network computing in the communication network 10 is determined through distributed orchestration, that is, a plurality of devices (which may be compute nodes on the edge side or the first-layer switch nodes) determine the switch node that performs in-network computing. In another possible embodiment, the switch node that performs in-network computing in the communication network 10 may be determined through central orchestration. The following provides example descriptions with reference to FIG. 9A and FIG. 9B.

FIG. 9A and FIG. 9B are a schematic flowchart of another communication method. In the communication method shown in FIG. 9A and FIG. 9B, the communication network 10 may further include a central controller (not shown in FIG. 1), and it is specified that the compute node 1 to the compute node 4 the compute node 9 to the compute node 12 collaboratively execute a same periodic compute task.

As shown in FIG. 9A and FIG. 9B, the method may specifically include the following steps.

S901: The compute node 1 to the compute node 4 and the compute node 9 to the compute node 12 on an edge side send resource requests to the central controller, to apply to the central controller for resources used to perform in-network computing, where the resource request includes a target communication task ID and network addresses of all compute nodes that participate in executing a same periodic compute task.

In this embodiment, the compute node 1 to the compute node 4 and the compute node 9 to the compute node 12 each generate a plurality of communication tasks in a process of collaboratively executing a same periodic compute task. For each of the plurality of communication tasks, each compute node sends to-be-computed data to a switch node in the communication network, to request the switch node to perform in-network computing. For ease of understanding and description, in this embodiment, an example in which the plurality of compute nodes upload corresponding to-be-computed data for a target communication task (one of the communication tasks) is used for description.

For the target communication task, each compute node may generate a same target communication task ID, and the target communication task ID indicates a communication task of sending data to some second-layer switch nodes.

In addition, the compute node on the edge side may further obtain a network address of another compute node that participates in executing the same compute task. The network address may be, for example, an IP address of the compute node or a media access control (media access control, MAC) address. For example, the compute node may parse a configuration file provided by a user to the application layer 501, to obtain the network addresses of the plurality of compute nodes that participate in executing the compute task.

Then, the compute node may generate the resource request based on the generated target communication task ID and the obtained network addresses of the plurality of compute nodes, and send the resource request to the central controller, to request the resource from the central controller. Each resource request sent by the compute node to the central controller may include a same target communication task ID and the network addresses of the plurality of compute nodes.

S902: The central controller obtains load information, where the load information indicates load of a plurality of first-layer switch nodes and a plurality of second-layer switch nodes.

For example, the load of the switch node may be measured based on a quantity of requests to which the switch node currently responds, or may be measured in another manner. This is not limited.

During specific implementation, the central controller may send a load obtaining request to each switch node, so that each switch node may respond to the load obtaining request and feed back current load of the switch node.

S903: The central controller sends, to the plurality of compute nodes based on the load information, indication information for a second-layer switch node 201.

The indication information of the switch node 201 may be, for example, a network address of the switch node 201, or information such as a name of the switch node 201.

In an implementation example, before receiving the resource requests, the central controller may obtain a topology structure of the communication network 10 and line rate aggregation performance of each switch node in the communication network 10 in advance. For example, in an initialization configuration phase of each switch node, the central controller may access each switch node to obtain the line rate aggregation performance of the switch node. In addition, the central controller may further obtain the topology structure of the communication network 10, for example, may generate the topology structure through self-learning, or may be provided with the topology structure by the user.

Then, the central controller generates an aggregation tree based on the load information, the topology structure of the communication network 10, the network addresses of the plurality of compute nodes, and the line rate aggregation performance of each switch node. For example, the central controller may first determine, based on the line rate aggregation performance of each switch node and the load information of each switch node, first-layer switch nodes and second-layer switch nodes that can currently perform in-network computing on to-be-computed data sent by the plurality of compute nodes, and generate the aggregation tree based on the network addresses of the plurality of compute nodes and the topology structure of the communication network 10. The generated aggregation tree may indicate a data interaction relationship between the plurality of compute nodes, some first-layer switch nodes, and some second-layer switch nodes when the communication network 10 performs in-network computing for the plurality of compute nodes, so that a second-layer switch node indicated by the aggregation tree is a switch node that performs in-network computing. In this embodiment, it is assumed that the switch node that performs in-network computing is the switch node 201.

Finally, after determining that the user uses the switch node 201 to perform in-network computing, the central controller may send an identity of the switch node 201, for example, the network address of the switch node 201, to the compute node 1 to the compute node 4 and the compute node 9 to the compute node 12.

During actual application, usually, the central controller successively receives resource requests (having same target communication task IDs) sent by different compute nodes. Therefore, when receiving a first resource request, the central controller may start to perform step S902 and step S903, and feed back the network address of the switch node 201 to the compute node that sends the resource request. In addition, the central controller further locally records the target communication task ID and the network address of the switch node 201. In this way, after receiving a resource request sent by another compute node, the central controller may send the network address of the switch node 201 to the another compute node based on a correspondence between the target communication task ID and the network address of the switch node 201 that are locally stored.

S904: The compute node 1 to the compute node 4 and the compute node 9 to the compute node 12 on the edge side each generate an in-network compute request, where the in-network compute request generated by each compute node includes the target communication task ID and the indication information for the switch node 201, and in-network compute requests generated by different compute nodes include same target communication task IDs.

For example, the indication information for the switch node 201 may be specifically the network address of the switch node 201. The compute node may write the network address of the switch node 201 into a payload (payload) area of the in-network compute request.

S905: The compute node 1 to the compute node 4 send the generated in-network compute requests to a first-layer switch node 101, and the compute node 9 to the compute node 12 send the generated in-network compute requests to a first-layer switch node 105.

S906: The switch node 101 and the switch node 105 parse the received in-network compute requests, to obtain the indication information for the switch node 201 and the target communication task IDs.

S907: The switch node 101 and the switch node 105 send in-network compute requests to the switch node 201 based on the indication information obtained through parsing, to request the switch node 201 to compute the intermediate data, where the in-network compute request includes the target communication task ID.

S908: The switch node 201 feeds back acknowledgment information to the switch node 101 and the switch node 105, to notify the switch node 101 and the switch node 105 of acknowledgment of performing in-network computing.

S909: After receiving the acknowledgment information, the switch node 101 and the switch node 105 actively pull the to-be-computed data from the compute node 1 to the compute node 4 and the compute node 9 to the compute node 12.

S910: The switch node 101 and the switch node 105 compute the respective pulled to-be-computed data, to obtain intermediate data, and send the intermediate data to the switch node 201.

S911: The switch node 201 computes the received intermediate data, to obtain a corresponding data compute result, and sends the data compute result to the switch node 101 and the switch node 105.

For example, the switch node 201 may reduce the intermediate data, to generate a corresponding result.

S912: The switch node 101 forwards the data compute result to the compute node 1 to the compute node 4, and the switch node 105 forwards the data compute result to the compute node 9 to the compute node 12.

It should be noted that an execution sequence of the steps in this embodiment is not limited to the example shown in FIG. 9A and FIG. 9B. For example, in another possible embodiment, step S902 may be performed before step S901. For example, the central controller may periodically monitor load of each second-layer switch node, so that after receiving the resource requests, the central controller determines, based on detected load information, a switch node used to perform in-network computing.

This can effectively reduce time in which compute resources of the switch node 201 and the switch node 202 are in an idle state, to improve utilization of the compute resources of the switch node 201 and the switch node 202. In addition, the foregoing process does not need to be controlled by a single node, to avoid a problem that the compute resources of the switch node 201 and the switch node 202 cannot be released for long time due to a failure of the single node.

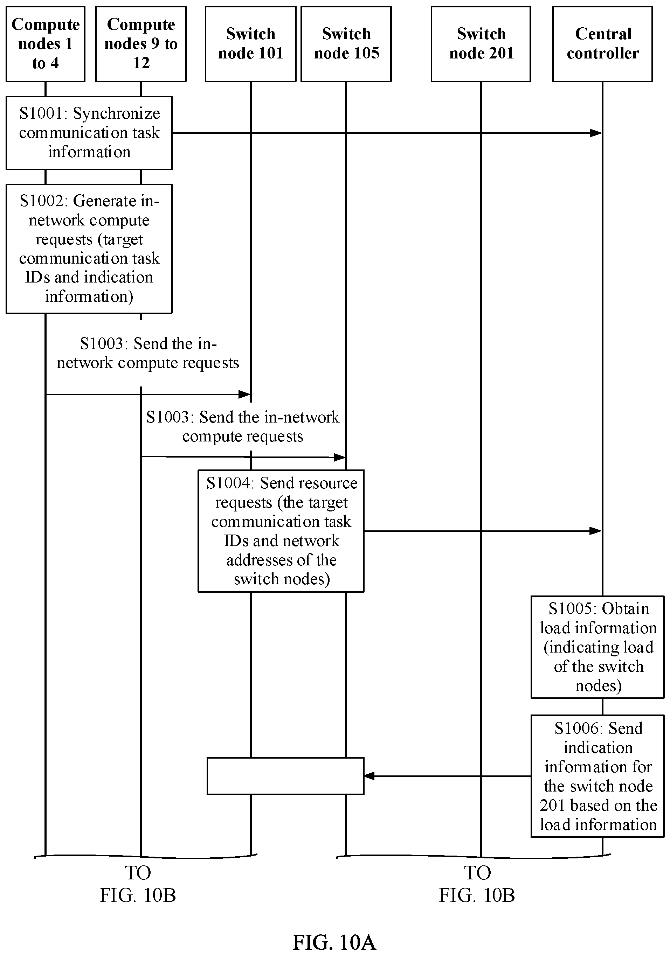

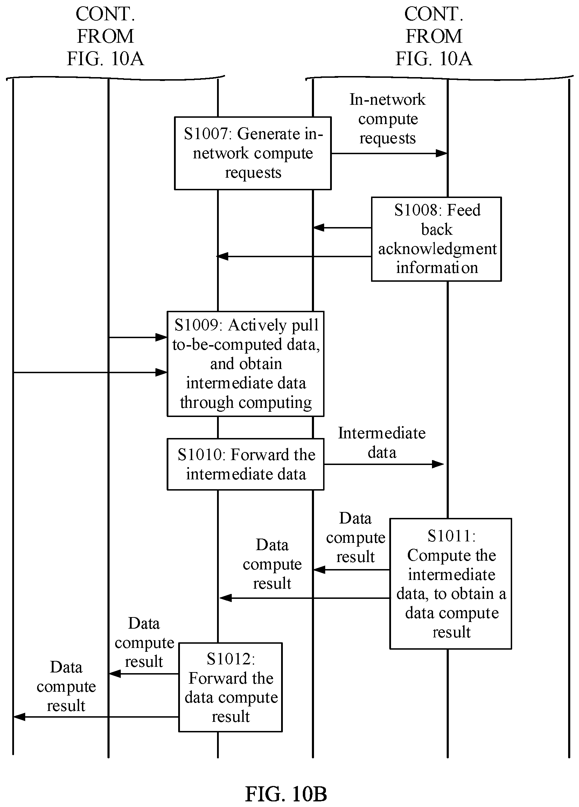

In the embodiment shown in FIG. 9A and FIG. 9B, an example in which the compute nodes on the edge side request the resources from the central controller is used for description. In another possible embodiment, the first-layer switch nodes may alternatively request resources from the central controller. The following provides example descriptions with reference to FIG. 10A and FIG. 10B.

FIG. 10A and FIG. 10B are a schematic flowchart of another communication method. In the communication method shown in FIG. 10A and FIG. 10B, the communication network 10 may further include a central controller (not shown in FIG. 1), and it is specified that the compute node 1 to the compute node 4 the compute node 9 to the compute node 12 collaboratively execute a same periodic compute task.

As shown in FIG. 10A and FIG. 10B, the method may specifically include the following steps.

S1001: The compute node 1 to the compute node 4 and the compute node 9 to the compute node 12 on an edge side synchronize communication task information to the central controller.

For example, the synchronized communication task information may include a target communication task ID.

During specific implementation, after generating a communication task, the framework layer 502 or the communication layer 503 in the compute node may synchronize related information of the communication task to the central controller, for example, synchronize the information to the central controller via first-layer switch nodes accessed by the compute node. In this way, the central controller can obtain the information such as the target communication task ID, and can determine network addresses of the switch nodes that forward the information, that is, network addresses of a switch node 101 and a switch node 105.

In this embodiment, the compute node 1 to the compute node 4 and the compute node 9 to the compute node 12 each generate a plurality of communication tasks in a process of collaboratively executing a same periodic compute task. For each of the plurality of communication tasks, each compute node sends to-be-computed data to a switch node in the communication network, to request the switch node to perform in-network computing. For ease of understanding and description, in this embodiment, an example in which the plurality of compute nodes upload corresponding to-be-computed data for a target communication task (one of the communication tasks) is used for description.

S1002: The compute node 1 to the compute node 4 and the compute node 9 to the compute node 12 on the edge side each generate an in-network compute request, where the in-network compute request generated by each compute node includes a target communication task ID, and in-network compute requests generated by different compute nodes include same target communication task IDs.

S1003: The compute node 1 to the compute node 4 send the generated in-network compute requests to the first-layer switch node 101, and the compute node 9 to the compute node 12 send the generated in-network compute requests to the first-layer switch node 105.

S1004: The switch node 101 and the switch node 105 send resource requests to the central controller, to apply to the central controller for resources for performing in-network computing, where the resource request includes the target communication task ID and the network address of the switch node that sends the resource request.

S1005: The central controller obtains load information, where the load information indicates load of a plurality of second-layer switch nodes.

For example, the load of the switch node may be measured based on a quantity of requests to which the switch node currently responds, or may be measured in another manner. This is not limited.

During specific implementation, the central controller may send a load obtaining request to each second-layer switch node, so that each switch node may respond to the load obtaining request and feed back current load of the switch node.

S1006: The central controller sends, based on the load information, indication information of a second-layer switch node 201 to the switch node 101 and the switch node 105.

In an implementation example, before receiving the resource requests, the central controller may obtain a topology structure of the communication network 10 and line rate aggregation performance of each second-layer switch node in advance, for example, may obtain the topology structure and the line rate aggregation performance of each switch node in an initialization phase.

Then, the central controller determines, based on the load information, the topology structure of the communication network 10, the network addresses of the switch node 101 and the switch node 15, and the line rate aggregation performance of each second-layer switch node, that a switch node that performs in-network computing is the switch node 201. After the switch node 201 performs in-network computing, load of the switch node 201 does not exceed maximum load corresponding to line rate aggregation performance of the switch node 201.

Finally, after determining that the user uses the switch node 201 to perform in-network computing, the central controller may send the indication information of the switch node 201, for example, a network address of the switch node 201, to the switch node 101 and the switch node 105.

S1007: The switch node 101 and the switch node 105 send in-network compute requests to the switch node 201 based on the received indication information of the switch node 201, to request the switch node 201 to compute intermediate data, where the in-network compute request includes the target communication task ID.

S1008: The switch node 201 feeds back acknowledgment information to the switch node 101 and the switch node 105, to notify the switch node 101 and the switch node 105 of acknowledgment of performing in-network computing.

S1009: After receiving the acknowledgment information, the switch node 101 and the switch node 105 actively pull the to-be-computed data from the compute node 1 to the compute node 4 and the compute node 9 to the compute node 12.

S1010: The switch node 101 and the switch node 105 compute the pulled to-be-computed data, to obtain the intermediate data, and send the intermediate data to the switch node 201.

S1011: The switch node 201 computes the received intermediate data, to obtain a corresponding data compute result, and sends the data compute result to the switch node 101 and the switch node 105.

For example, the switch node 201 may reduce the intermediate data, to generate a corresponding result.

S1012: The switch node 101 forwards the data compute result to the compute node 1 to the compute node 4, and the switch node 105 forwards the data compute result to the compute node 9 to the compute node 12.

It should be noted that an execution sequence of the steps in this embodiment is not limited to the example shown in FIG. 10A and FIG. 10B. For example, in another possible embodiment, step S1005 may be performed before step S1004. For example, the central controller may periodically monitor load of each second-layer switch node, so that after receiving the resource requests, the central controller determines, based on detected load information, a switch node used to perform in-network computing.

In addition, in the embodiment shown in FIG. 10A and FIG. 10B, an example in which the compute nodes synchronize the communication task information to the central controller in advance is used for description. In another embodiment, the compute nodes may not synchronize the communication task information. In this case, the resource requests sent by the switch node 101 and the switch node 105 to the central controller may include both the target communication task IDs and the network addresses of all first-layer switch nodes that forward the same target communication task IDs, that is, include the network address of the switch node 101 and the network address of the switch node 105.

It should be noted that the embodiments shown in FIG. 4A and FIG. 4B to FIG. 10A and FIG. 10B are merely used as some examples for description. During actual application, the switch node that performs in-network computing may be determined in another manner, for example, in-network computing may be performed on the to-be-computed data based on the combined implementations of the foregoing embodiments. For example, when the embodiments shown in FIG. 4A and FIG. 4B and FIG. 7A and FIG. 7B are combined, the switch node 101 and the switch node 105 may perform hash operations on the target communication task IDs according to a plurality of hash functions, and select a plurality of second-layer switch nodes based on a plurality of hash values to compute the intermediate data (that is, a plurality of paths at the second layer are selected through hashing to send the intermediate data). In this case, before forwarding the intermediate data, the switch node 101 and the switch node 105 may first divide the intermediate data into a plurality of subsets based on a quantity of selected second-layer switch nodes, and send data of one subset of the intermediate data to each second-layer switch node selected through hashing, so that a plurality of second-layer switch nodes collaboratively complete processing on the intermediate data. This can further improve data processing effect.

Alternatively, based on a change of the topology architecture of the communication network 10 or a change of the compute task that is executed, different manners (namely, different embodiments) may be selected to determine the second-layer switch node that performs in-network computing.

In addition, in this application, an example in which the communication network 10 includes switch nodes at two layers is used for description. During actual application, the communication network may alternatively include switch nodes at more than three (including three) layers. In this case, the switch node that performs in-network computing may be a switch node at a third layer (or a higher layer). For a specific implementation process of selecting the switch node at the third layer (or the higher layer) to perform in-network computing, refer to the related descriptions in the foregoing embodiments. Details are not described herein again.

In addition, an embodiment of this application further provides a switch node, including a processor and a memory. The memory is configured to store instructions, and the processor is configured to execute the instructions stored in the memory, so that the switch node performs the method performed by the first-layer switch node in the foregoing embodiments, or performs the method performed by the second-layer switch node in the foregoing embodiments.

In addition, an embodiment of this application further provides a computer-readable storage medium. The computer-readable storage medium stores instructions. When the instructions are run on one or more compute devices, the one or more compute devices are caused to perform the method performed by the first-layer switch node in the foregoing embodiments, or perform the method performed by the second-layer switch node in the foregoing embodiments.

In addition, an embodiment of this application further provides a computer program product. When the computer program product is executed by a switch node, the switch node may perform the method performed by the first-layer switch node in the foregoing embodiments, or perform the method performed by the second-layer switch node in the foregoing embodiments. The computer program product may be a software installation package. If any one of the foregoing communication methods needs to be used, the computer program product may be downloaded, and the computer program product may be executed on a computer.

In addition, it should be noted that the described apparatus embodiments are merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that can be performed by a computer program can be easily implemented by using corresponding hardware. In addition, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by using software, hardware, firmware, or any combination thereof. When software is used to implement embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A communication method, wherein the method is applied to a communication network, the communication network comprises switch nodes at a plurality of layers, the plurality of layers comprise a first layer and a second layer, different first-layer switch nodes communicate with each other via a second-layer switch node, the first-layer switch nodes comprise a plurality of first target switch nodes, the second-layer switch node comprises at least one second target switch node, and the method comprises:
receiving, by the plurality of first target switch nodes, to-be-computed data of a same periodic compute task and target communication task identities IDs corresponding to the to-be-computed data that are sent by a plurality of compute nodes, wherein the plurality of compute nodes generate a plurality of communication tasks during execution of the compute task, the target communication task ID indicates one of the plurality of communication tasks, and the target communication task IDs sent by all of the plurality of compute nodes are the same;
computing, by the plurality of first target switch nodes, the to-be-computed data, to obtain intermediate data, and sending the intermediate data and the target communication task IDs to the at least one second target switch node;
computing, by the at least one second target switch node, the received intermediate data corresponding to the same target communication task IDs, to obtain a data compute result;
sending, by the at least one second target switch node, the data compute result to the plurality of first target switch nodes; and
sending, by the plurality of first target switch nodes, the data compute result to the plurality of compute nodes that execute the compute task.

2. The method according to claim 1, wherein the sending the intermediate data and the target communication task IDs to the at least one second target switch node comprises:
obtaining, by the plurality of first target switch nodes, indication information, wherein the indication information indicates that a switch node that computes the intermediate data is the at least one second target switch node; and
sending, by the plurality of first target switch nodes, the intermediate data and the target communication task IDs to the at least one second target switch node.

3. The method according to claim 2, wherein the obtaining, by the plurality of first target switch nodes, the indication information comprises:
sending, by the plurality of first target switch nodes, first in-network compute requests to a first candidate switch node in the second-layer switch node, wherein the first in-network compute request is used to request the first candidate switch node to compute the intermediate data;
receiving, by the plurality of first target switch nodes, a change request sent by the first candidate switch node, wherein the change request indicates to change the second-layer switch node that processes the intermediate data;
sending, by the plurality of first target switch nodes, second in-network compute requests to a second candidate switch node in the second-layer switch node, wherein the second in-network compute request is used to request the first candidate switch node to compute the intermediate data; and
receiving, by the plurality of first target switch nodes, the indication information sent by the second candidate switch node, wherein the indication information indicates the second candidate switch node to compute the intermediate data, and the second target switch node is the second candidate switch node.

4. The method according to claim 2, wherein the obtaining, by the plurality of first target switch nodes, the indication information comprises:
receiving, by the plurality of first target switch nodes, a plurality of in-network requests sent by the plurality of compute nodes, wherein each of the plurality of in-network requests comprises the target communication task ID; and
generating, by the plurality of first target switch nodes, the indication information based on the target communication task IDs.

5. The method according to claim 1, wherein there are a plurality of second target switch nodes; and
the sending the intermediate data and the target communication task IDs to the at least one second target switch node comprises:
dividing, by each of the plurality of first target switch nodes, the generated intermediate data into a plurality of subsets, wherein a quantity of subsets is the same as a quantity of second target switch nodes; and
sending, by each first target switch node, the plurality of subsets and the target communication task ID to the plurality of second target switch nodes, wherein each first target switch node sends one of the plurality of subsets and the target communication task ID to each second target switch node.

6. The method according to claim 2, wherein the communication network further comprises a central controller, and the method further comprises:
obtaining, by the central controller, load information, wherein the load information indicates load of the plurality of first-layer switch nodes and load of a plurality of second-layer switch nodes in the communication network;
sending, by the central controller, an identity of the at least one second target switch node to the plurality of compute nodes based on the load information; and
sending, by the plurality of compute nodes, the indication information to the plurality of first target switch nodes.

7. The method according to claim 2, wherein the communication network further comprises a central controller, and the method further comprises:
obtaining, by the central controller, load information, wherein the load information indicates load of the plurality of first-layer switch nodes and load of a plurality of second-layer switch nodes in the communication network; and
sending, by the central controller, the indication information to the plurality of first target switch nodes based on the load information.

8. A communication network, wherein the communication network comprises switch nodes at a plurality of layers, the plurality of layers comprise a first layer and a second layer, different first-layer switch nodes communicate with each other via a second-layer switch node, the first-layer switch nodes comprise a plurality of first target switch nodes, and the second-layer switch node comprises at least one second target switch node;
the plurality of first target switch nodes are configured to: receive to-be-computed data of a same periodic compute task and target communication task identities IDs corresponding to the to-be-computed data that are sent by a plurality of compute nodes, wherein the plurality of compute nodes generate a plurality of communication tasks during execution of the compute task, the target communication task ID indicates one of the plurality of communication tasks, and the target communication task IDs sent by all of the plurality of compute nodes are the same; and compute the to-be-computed data, to obtain intermediate data, and send the intermediate data and the target communication task IDs to the at least one second target switch node;
the at least one second target switch node is configured to: receive the intermediate data and the target communication task IDs; compute the intermediate data corresponding to the same target communication task IDs, to obtain a data compute result; and send the data compute result to the plurality of first target switch nodes; and
the plurality of first target switch nodes are further configured to send the data compute result to the plurality of compute nodes that execute the compute task.

9. The communication network according to claim 8, wherein the plurality of first target switch nodes are specifically configured to:
obtain indication information, wherein the indication information indicates that a switch node that computes the intermediate data is the at least one second target switch node; and
send the intermediate data and the communication task IDs to the at least one second target switch node.

10. The communication network according to claim 9, wherein the plurality of first target switch nodes are specifically configured to:
send first in-network compute requests to a first candidate switch node in the second-layer switch node, wherein the first in-network compute request is used to request the first candidate switch node to compute the intermediate data;
receive a change request sent by the first candidate switch node, wherein the change request indicates to change the second-layer switch node that processes the intermediate data;
send second in-network compute requests to a second candidate switch node in the second-layer switch node, wherein the second in-network compute request is used to request the first candidate switch node to compute the intermediate data; and
receive the indication information sent by the second candidate switch node, wherein the indication information indicates the second candidate switch node to compute the intermediate data, and the second target switch node is the second candidate switch node.

11. The communication network according to claim 9, wherein the plurality of first target switch nodes are configured to:
receive a plurality of in-network requests sent by the plurality of compute nodes, wherein each of the plurality of in-network requests comprises the target communication task ID; and
generate the indication information based on the target communication task IDs.

12. The communication network according to claim 8, wherein there are a plurality of second target switch nodes; and
each of the plurality of first target switch nodes is configured to:
divide the generated intermediate data into a plurality of subsets, wherein a quantity of subsets is the same as a quantity of second target switch nodes; and
send the plurality of subsets and the target communication task ID to the plurality of second target switch nodes, wherein each first target switch node sends one of the plurality of subsets and the target communication task ID to each second target switch node.

13. The communication network according to claim 9, wherein the communication network further comprises a central controller, and the central controller is configured to:
obtain load information, wherein the load information indicates load of the plurality of first-layer switch nodes and load of a plurality of second-layer switch nodes in the communication network; and
send an identity of the at least one second target switch node to the plurality of compute nodes based on the load information; and
the plurality of first target switch nodes are further configured to receive the indication information sent by the plurality of compute nodes.

14. The communication network according to claim 9, wherein the communication network further comprises a central controller, and the central controller is configured to:
obtain load information, wherein the load information indicates load of the plurality of first-layer switch nodes and load of a plurality of second-layer switch nodes in the communication network; and
send the indication information to the plurality of first target switch nodes based on the load information.

15. A switch node, comprising a processor and a memory, wherein
the memory is configured to store instructions, and the processor executes the instructions stored in the memory, to cause the switch node to perform the communication method performed by the second target switch node according to claims 1 to 7, or perform the communication method performed by the first target switch node according to claims 1 to 7.

16. A computer-readable storage medium, wherein the computer-readable storage medium stores instructions, and when the instructions are run on at least one compute device, the at least one compute device is caused to perform the communication method performed by the second target switch node according to claims 1 to 7, or perform the communication method performed by the first target switch node according to claims 1 to 7.
